(19) Europäisches Patentamt
European Patent Office
Office européen des brevets

(11) EP 3 084 675 B1

(12) EUROPEAN PATENT SPECIFICATION

(45) Date of publication and mention
of the grant of the patent:
**07.02.2018 Bulletin 2018/06**

(51) Int Cl.:
**G06F 21/60** *(2013.01)*        **G06F 21/62** *(2013.01)*

(21) Application number: **13824319.1**

(22) Date of filing: **17.12.2013**

(86) International application number:
**PCT/GB2013/053321**

(87) International publication number:
**WO 2015/092341 (25.06.2015 Gazette 2015/25)**

(54) **DATA ACCESS CONTROL FOR BUSINESS PROCESSES**

DATENZUGRIFFSKONTROLLE FÜR WIRTSCHAFTSVERFAHREN

CONTRÔLE D'ACCÈS À DES DONNÉES POUR DES PROCÉDÉS ÉCONOMIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.10.2016 Bulletin 2016/43**

(73) Proprietors:
• **Khalifa University of Science, Technology
and Research
Abu Dhabi (AE)**
• **British Telecommunications public limited
company
London EC1A 7AJ (GB)**
• **Emirates Telecommunications Corporation
Abu-Dhabi (AE)**

(72) Inventors:
• **COLOMBO, Maurizio
Abu Dhabi (AE)**
• **LEIDA, Marcello
28036 Madrid (ES)**
• **DAMIANI, Ernesto
26013 Crema (IT)**

(74) Representative: **Hodsdon, Stephen James et al
Mewburn Ellis LLP
City Tower
40 Basinghall Street
London EC2V 5DE (GB)**

(56) References cited:
**US-B1- 7 437 362**

• JIANNENG CAO ET AL: "ACStream: Enforcing
Access Control over Data Streams", DATA
ENGINEERING, 2009. ICDE '09. IEEE 25TH
INTERNATIONAL CONFERENCE ON, IEEE,
PISCATAWAY, NJ, USA, 29 March 2009
(2009-03-29), pages 1495-1498, XP031447860,
ISBN: 978-1-4244-3422-0
• WOLFGANG LINDNER ET AL: "Towards a Secure
Data Stream Management System", 1 January
2006 (2006-01-01), TRENDS IN ENTERPRISE
APPLICATION ARCHITECTURE LECTURE
NOTES IN COMPUTER SCIENCE;;LNCS,
SPRINGER, BERLIN, DE, PAGE(S) 114 - 128,
XP019028939, ISBN: 978-3-540-32734-9 the whole
document
• RIMMA V NEHME ET AL: "A Security Punctuation
Framework for Enforcing Access Control on
Streaming Data", DATA ENGINEERING, 2008.
ICDE 2008. IEEE 24TH INTERNATIONAL
CONFERENCE ON, IEEE, PISCATAWAY, NJ,
USA, 7 April 2008 (2008-04-07), pages 406-415,
XP031245998, ISBN: 978-1-4244-1836-7

**Description**

Field of the Invention

The present invention relates to methods and devices for access control. It is particularly, but not exclusively, concerned with providing access control and access control enforcement in relation to business process data streams.

Background of the Invention

Process Mining (PM) techniques are able to extract knowledge from event logs commonly available in today's information systems. PM aims to discover, monitor, and improve business processes in a variety of business domains. According to W.v.d. Aalst et al. [8], "There are two main drivers for the growing interest in process mining. On the one hand, more and more events are being recorded, thus, providing detailed information about the history of processes. On the other hand, there is a need to improve and support business processes in competitive and rapidly changing environments".

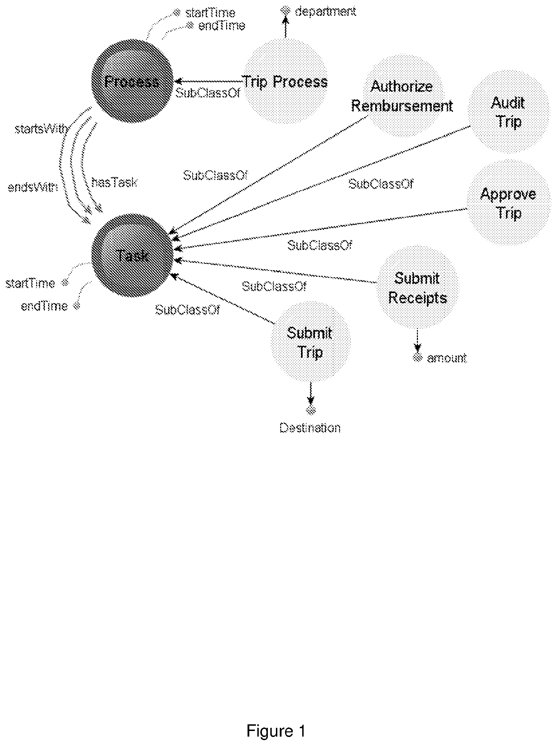

A Process Monitor models and describes business process information using various concepts such as tasks, sub-processes, start and end times, properties, relationships, workflows etc. The schema that defines these constructs can be extended easily and automatically to define new domain specific concepts, which becomes critical as processes evolve to become more complex. An example of such a schema is shown in Figure 1.

There are several ways in which the system receives new data, including remote process monitors sending data via JMS, Web services etc. Data can also be imported from databases and files using the relevant importers. The import and process monitoring tools both require some form of domain knowledge to be able to ascertain the nature of the data they are receiving. Both process data and domain knowledge are represented using standard metadata formats. For instance, the Process Monitor can generate process logs where activities are stored as RDF triples referring to company-specific activity ontology.

RDF triples assign meaning to the process log items, ensuring that they can be universally understood by all applications that also have the relevant domain knowledge.

Moreover the use of a graph-based representation allows extreme flexibility.

The applicants have previously developed a process monitor that requires minimal preprocessing of data and no expensive import operations, therefore allowing the system to handle real-time updates more easily. The data collected by the process monitor is represented by a continuous flow of triples that capture the status of the processes. This continuous flow of information can be accessed through a SPARQL endpoint used to extract and analyse process execution data.

While the application potential of a Process Monitor is indeed huge, some hindering factors for its adoption exist, including privacy and confidentiality concerns.

Here, we refer to concerns for corporate privacy, i.e. the release of information about a collection of process data rather than of an individual data item. Such concerns have been raised in the context of collaborations where processes are often totally or partially outsourced, and different parties hold process log data.

There are two major approaches to protecting process log privacy while preserving the computability of process metrics: (1) using homomorphic encryption to hide log content and (2) using trusted access control components to obfuscate the process log visibility according to each user's access rights.

While approach (1) has been used for manufacturing processes, approach (2) is more suitable for processes involving human activities supported by IT. Such processes generate logs whose entries have a clearly defined semantics, e.g. by means of an activity ontology (as the one in Figure 1).

Current technology typically requires the translation or import of log entries into a system before the log can be analysed. Accordingly, log access control techniques are designed for off-line enforcement of access rights; in other words, log entries are treated as static resources, like entries in a database, and enforcement mechanisms grant or deny access to them according to an access control policy. Moreover process logs are defined according to a particular structure (sequence of activities) and an access control system cannot merely deny access to one part of the process because it will break the process workflow. Therefore a suitable log rewriting/repair procedure need to be defined in order to adapt the process execution log to the access control policy.

*Background on RDF and SPARQL*

The Resource Description Framework (RDF) [1] is a directed, labelled graph data format for representing information in the Web, formed by concepts, instances, attributes and relations and represented by a set of triples in the form of <s,p,o> where s represents subject of the triple, p is the predicate and o is the object.

The SPARQL specification [2] defines the syntax and semantics of a query language for RDF triple bases.

SPARQL can be used to express queries across diverse data sources, whether the data is stored natively as RDF or viewed as RDF via middleware. *Access control to process flows*

Access Control (AC) is the ability to allow or deny the use of resources. In other words, access control decides which subject is authorized to perform certain operations on a given object and who is not. The notion of controlling access is independent of the nature of objects and subjects; objects can be physical resources (such as a conference room, to which only registered participants should be admitted) or digital ones (for example, a private image file on a computer, which only certain users should be able to display/edit), while subjects can be human users or software entities. Along the years, many access control techniques like access control lists (ACL), capability lists and role-based access control (RBAC) have been proposed. In particular, RBAC models proposed in the 1990s [9] are still widely used today.

Access control is not the only motivation for filtering process models and data. Selective visualization of process models has long been proposed to enable process analysis at different levels of abstraction. For instance Polyvanyy et al. [10] describe structural aggregations of the process logic in order to realize different levels of abstraction. Greco et al. [11] proposed an approach to produce hierarchical process views of the process that capture process behaviour at different level of detail. However, none of these techniques deals with adaptive visualization of data during process monitoring.

Access control models for process-aware information systems are well known in the literature. However, such models are mostly aimed at process execution, i.e. at controlling who can perform process activities. Russell and van der Aalst [12] describe various possibilities for assigning process activities to users. Wainer et al. [13] proposed the W-RBAC access control model, with an expressive logic-based language for selecting users that are authorized to perform certain process tasks. Over time, additional approaches for dealing in a secure way with specific issues related to process management were introduced. In the context of the ADEPT project, Weber et al. [14] extend RBAC to support new actions like process changes. In turn, the CEOSIS project discussed how to support such changes and how to correctly adapt access rules when the underlying organizational model is changed [15]. However, none of the above approaches has addressed the problem of AC in conjunction with process monitoring.

Rather than defining a formal AC model, event flows generated by process monitors have been traditionally filtered using static ad-hoc views on event stores. For each process model, a number of static views can be (manually) defined, each of them computing the information accessible for users with a particular role. This way, no AC model in necessary: access rights over the process are derived implicitly from each view. In other words, the view-based approach relies on existing view definition languages to express access rights over process data. However, static views are costly to maintain. If the underlying process model is modified, views affected by this change have to be identified, possibly among a large number of existing views. Also, when a user has multiple roles, more than one view applies, and view combination may lead to conflicts with unexpected results.

An access control model aimed at process data has been recently described in the framework of the Proviado project for process data visualization [16]. The Proviado access control model expresses access rights on specific process aspects called objects. Proviado objects include process activities, actors and context information. The Proviado model has been used to express access rights in some process analysis case studies, but no automatic enforcement platform has been described.

*Access control to RDF Schemas*

Business processes are often represented as RDF-graphs. Two main trends in general-purpose access control mechanisms to RDF-graphs are identifiable in existing literature: the first relies on controlling access to specific elements of RDF graphs (instances, concepts, relations, attributes, triples), while the second used a set of views defined on the graph according to the permissions of the user and allows the users to query the views. Both these approaches are static in nature; the main difference is that the latter approach allows more flexibility since it can grant/deny the access to individual paths in the graphs.

The above analysis does not consider techniques for controlling inference from data. However these techniques refers to a higher level of abstraction than the present invention is concerned with, since it refers to logically bounded representations such as OWL or rule based inference systems like SWRL.

Securing access to elements of the graph

The protection of information encoded in RDF graphs represents a relatively novel direction of research. In [5] the authors present a Semantic Based Access Control (SBAC), a model based on OWL ontologies (OWL is an extension of RDF based on Description Logics). This approach is focused toward securing access to elements of the schema (Concepts, Individuals, Attributes and Relations) and to provide a framework to prevent inferring information that the user should not access. Users are authenticated based on the credentials they offer. OWL ontologies are used for modelling entities along with their semantic interrelations in three domains of access control; subject, object and action domain.

Another approach is described in [6], where the authors present ROWLBAC, a role-based access control architecture for controlling access to OWL ontologies. In this document standard semantic web infrastructures are used for containing knowledge and existing reasoners can be adopted for policy evaluation without the need of modifying them. In the work [7], the standard XACML policy language is used, and the XACML meta-model is extended via an ontology modelling a subset of its functionalities. A security proxy rewrites incoming SPARQL queries in order to make them policy-compliant. The rewriting uses a filtering technique, by appending filters to the query.

Privacy-aware query rewriting

Privacy-aware query rewriting assumes that users' access rights can be expressed as sets of static views. This assumption, however, is more reasonable for static RDF triple stores than for a process monitoring scenario where triples are generated dynamically. Privacy-aware query rewriting aims to preserve data integrity by solving the rewriting problem. Generally speaking, given a set of views $V = \{V_1, V_2, ... ,V_n\}$ over a RDF graph G, and a SPARQL query Q over the vocabulary of the views, query rewriting computes a SPARQL query $Q_0$ over G such that $Q_0(G) = Q(V(G))$. Rewriting must satisfy two properties: soundness and completeness.

a. A rewriting is sound iff $Q_0(G)$ is contained in $Q(V(G))$

b. The rewriting is complete iff $Q(V(G))$ is contained in $Q_0(G)$

Soundness and completeness together show that $Q(V(G)) = Q_0(G)$.

Available SPARQL rewriting algorithms used to enforce access control policies [4] tend to have high complexity in the number of views involved. Once the user has written a query, it is necessary to identify which views need to be taken into account to rewrite the query so that it becomes executable with respect to the underlying RDF triple store.

Proposals in the literature [4] rely on the following condition: if a variable mapping exists between a pattern (*sv, pv, ov*) in the result description RD ($V_j$) of a view $V_j$ and one of the triple patterns (*sq, pq, oq*) in the graph pattern GP(Q) of query Q, then view $V_j$ is needed to rewrite Q. SQR [4] performs the query rewriting in two steps.

In the first step the SQR algorithm determines, for each triple pattern in user query, the set of views whose variables appear in the pattern.

In the second step the algorithm constructs the rewriting of the original query as a union of conjunctive queries to the triple store. Rewritten queries use the original schema graph but select only "authorized" nodes.

A similar approach is described in patent [17]: the method used in the patent to rewrite SPARQL queries adopts an approach based on static views and very similar to the one described in [4].

Access control to information flow

The documents discussed above address a different scenario compared to that which is addressed by the present invention, inasmuch they refer to controlling access to process data or RDF graphs and do not consider dynamically changing information.

The present invention aims to address the situation where a RDF triple flow is dynamically created via a Process Monitor, which dynamically updates the RDF graph by adding new triples.

Large enterprises have business models that are highly dependant on processes that are executed both in good time (meeting Cycle Time measures) and correctly with minimal failures and repeats (meeting Right First Time measures). In such large organisations, in order to support the business in managing and improving processes across different systems and divisions, solutions are required that can analyse different forms of business process data in order to determine the real state of execution of the processes and evaluate accurately the performance measures associated with them. Nowadays, the state of the art in process analysis allows monitoring process events as an information flow in a real-time event processing fashion.

Aspects of the present invention aim to allow dynamically de-multiplexing flows of information according to users' permissions, maintaining the integrity of the flow. In particular, telecommunication enterprises have to deal daily with an important amount of live processes of critical importance therefore is important to monitor and analyse the data flow generated by such processes. Due also to the complexity of the processes being analysed it can be important to provide the right level of abstraction to the right professional, so that both the process analyst who is interested in global process statistics and high level performance measures and the process executor which is interested in low-level detail process data, will perform better if the data flow that they are provided to analyse is personalised according to user's role.

Furthermore internal and countrywide regulations may impose constraints on the details of the processes that can be accessed by separate roles. The present invention aims to provide solutions which allow these constraints to be met.

Aspects of the present invention aim to provide new, dynamic methods and systems for the encoding of access rights. Existing solutions typically provide an abstract access control model to define access rights in an abstract format. Such access rights are then manually mapped to static views over the process. This typically does not allow for dynamic and/or real-time updating of the access control and application to a data stream.

A further aim of the present invention is to provide a dynamic filter construction technique which can enable efficient online generation of a personalised event flows that satisfy the corresponding access control policies by applying only the part of the policy relevant to the original event flows. In contrast, the prior art filter construction techniques builds complete filter based on the policy and process model by completely translating the policy into views, without considering the actual event flow. Clearly in case of big policies and big process models this approach becomes inefficient.

In the landscape of providing access control in relation to generic RDF metadata, existing approaches rely on static views. The invention described in patent [17] is based on appending static filters to queries to RDF repositories, in order to filter out the information that cannot be accessed by the user submitting the query. This limits the applicability of patent [17] to process data, because unchecked removal of information on the part of the static filter may result in part of the GP path of the user query that cannot be traversed anymore, preventing the user to obtain results that she was entitled to access, just because a node in the RDF graph is removed by the filter.

Summary of the Invention

Accordingly, at their broadest, methods of the present invention provide for controlling access to data using policies and associated filters which can be dynamically updated to permit or deny a user access to the data.

A first aspect of the present invention provides a method of controlling access to a stream of data, the method including the steps of: storing a plurality of policies each defining access rights related to a user and having a filter associated with it; continuously, for each new data element: checking whether said data element can be accessed under each of said policies; updating the filter associated with each policy to either permit or prevent access to said data element in accordance with said policy; and applying the updated filters to the incoming stream of data to generate a plurality of data stores, each based on one of said policies, receiving a query from a user relating to the data and returning the results of said query to the user based only on data in the respective data store such that the user is only able to access data permitted by the policy associated with the user.

A second aspect of the present invention provides a method of controlling access to data, the method including the steps of: storing a plurality of policies each defining access rights related to a user and having a filter associated with it; continuously, for each new data element: checking whether said data element can be accessed under each of said policies; and updating the filter associated with each policy to either permit or prevent access to said data element in accordance with said policy; receiving a query from a user relating to the data; revising said query by incorporating the updated filter for said user; and returning the results of said revised query to the user such that the user is only able to access data permitted by the policy associated with the user.

In certain embodiments, the methods of the above aspects can provide methods for fast online filtering of business process logs based on users' access rights and the data is business process data.

The methods may further comprise a series of steps to encode each user's access rights to the process log in a machine readable format, and more preferably to use such encoding together with incoming process events to compute a custom run-time filter to be applied to the process log as it is being recorded.

The steps of encoding the access rights may express the access rights to process data as an extension to an existing access control language, XACML, recognized as a worldwide standard. Preferably the method supports an extension to XACML that encodes access control rights as machine-readable obligations to be met at run time, i.e. while reading the incoming process event flow.

The methods of the above aspects preferably provide for logical log de-multiplexing, enabling each user to query, inspect and monitor a separate event flow which is adapted depending on their access rights.

By using the methods of the above aspects, log integrity constraints may be enforced on all de-multiplexed flows resulting from them.

The above aspects can also allow for dynamic and real time (or substantially real time) changes to policies and revocation of rights for a user.

The methods of the above aspects preferably provide for a filter update process which automatically computes dynamic views on the basis of (i) the obligations and (ii) the event flow generated by process execution whilst maintaining log integrity constraints. Specifically, if evaluating the policy for a given user generates an obligation to hide an activity, the methods can add the filter to hide the activity only if (and when) the activity to be hidden actually shows up in the data stream or process log.

The methods of these aspects can accordingly build up the filters at run time, depending on the triples dynamically added to the process flow.

As the methods of these aspects are able to apply restrictions directly on the data stream or process flow, the event flow can be continuously analysed when updating the filters and verifying permissions on the data. The data that the user is allowed to access can then be materialized into a single user-dedicated RDF repository that the user can query using SPARQL. This can ensure that queries performed by the users are executed on a "sanitised" set of data or flow of events. This makes these methods suitable for deployment in a real time environment where processes are continuously monitored and users can register continuous queries in order to be notified by new events matching their query.

The methods of the present aspects are inherently flexible, in contrast to prior art approaches based on static views which use the entire access control policy to build the views associated to a user, adding from the beginning all constraints, including those that may never be evaluated. The creation and maintenance of such static views can be extremely inefficient. In the present methods a filter update may only be carried out after having checked that the data to filter is effectively present in the flow. Preferably the filter is evaluated incrementally, depending on the set of obligations enforced by the access control policy for an incoming event in the flow.

The methods of these aspects can also serve to preserve semantic integrity. Unlike the prior art (for example [17]), the above methods can support maintaining the semantic integrity of the process flow. This may be achieved by the policy enforcement component generating "constructive" obligations, i.e. obligations to repair the event flow (e.g., eliminating time gaps) after an activity or an attribute has been hidden.

The methods may further provide for using obligations to compute a semantically sound sanitized flow preserving the correctness of metrics computed on the flow, like total elapsed time.

The methods of the present aspects may generate "sanitized" event flows that the user is able to access and query. The semantic integrity of the sanitized flow (e.g., w.r.t. timing) can then be preserved. In some preferred embodiments, an independent policy creator can redact policies to create policies in the standard XACML format (preferably using an extension defined for this purpose). Such policies can be evaluated to provide information on how to filter the flow of triples.

The policy documents created using this definition, can be forwarded to an independent evaluator to verify that is compliant with auditing rules and other regulations. An important application environment for this aspect is the case of telecom companies that are regulated by external bodies such as AGCOM. Our invention will allow AGCOM to continuously verify the policies that are used to generate the running filters (without, of course, seeing the data) making sure that companies that open their processes to competitors do not disclose information that can be used for unfair competition gain.

The methods of the above aspects can be deployed together with a SPARQL query engine to support transparent querying of process logs whose entries are written in the standard RDF format.

In certain embodiments, the step of updating the filter may include adding or removing one or more selectors from the filter, said selectors eliminating data to which access is not permitted by the associated policy from the output of the filter. In this way each filter can act as a "mask" on the data and be used either to produce a sanitised data stream for access by the user, or be convolved with a user's query to produce a sanitised response to the query.

Such selectors/filters can be generally permissive, such that the step of updating the filter includes adding one or more selectors to the filter if the new data element is disallowed by the associated policy, and leaving the filter unchanged if the new data element is allowed by the associated policy.

Alternatively such selectors/filters can be generally restrictive, such that the step of updating the filter includes removing one or more selectors from the filter if the new data element is allowed by the associated policy, and leaving the filter unchanged if the new data element is disallowed by the associated policy.

The term "user" includes human users, but also software entities (programs), for example those which run continuous monitoring or continuous querying on a data stream or process flow.

In certain embodiments, the updated filters may be in the form of a SPARQL CONSTRUCT query.

The outputs generated when the data process is de-multiplexed (the data against which the user queries are run) are preferably in the form of RDF repositories.

The methods of the above aspects may include any combination of some, all or none of the above described preferred and optional features.

The methods of the above aspects are preferably implemented in a system according to the third or fourth aspects of this invention.

Further aspects of the present invention include computer for running on computer systems which carry out the methods of the above aspects, including some, all or none of the preferred and optional features of those aspects.

At their broadest, systems of the present invention provide access control systems which use policies and associated filters which can be dynamically updated to permit or deny a user access to the data.

A third aspect of the present invention provides an access control system controlling access to a stream of data, the system including: a database storing a plurality of policies each defining access rights related to a user and having a filter associated with it; and a processor, wherein the processor is arranged to run the following components: a filter updater which, continuously for each new data element: checks whether said data element can be accessed under each of said policies; and updates the filter associated with each policy to either permit or prevent access to said data element in accordance with said policy; a log demultiplexer which applies the updated filters to the incoming stream of data to generate a plurality of data stores (e.g. policy-modified RDF graphs), each based on one of said policies, and wherein the processor is further arranged to receive a query from a user relating to the data and to return the results of said query to the user based only on data in the respective data store such that the user is only able to access data permitted by the policy associated with the user.

A fourth aspect of the present invention provides an access control system controlling access to data, the system including: a database storing a plurality of policies each defining access rights related to a user and having a filter associated with it; a processor, wherein the processor is arranged to run a filter updater which, continuously for each new data element: checks whether said data element can be accessed under each of said policies; and updates the filter associated with each policy to either permit or prevent access to said data element in accordance with said policy; wherein the processor is further arranged to: receive a query from a user relating to the data; run a log demultiplexer which revises said query by incorporating the updated filter for said user; and return the results of said revised query to the user such that the user is only able to access data permitted by the policy associated with the user.

In certain embodiments, the access control systems of the above aspects can provide fast online filtering of business process logs based on users' access rights and the data is business process data.

The systems may further comprise a policy encoder (which may form part of a broader policy administration function) which provides for administrator interaction with the processor and the stored policies (using, for example, standard computer input/output components such as a terminal with a screen and keyboard/other data input device) which allows each user's access rights to be encoded in the process log in a machine readable format, and more preferably allows such encoding to be used together with incoming process events to compute a custom run-time filter to be applied to the process log as it is being recorded.

The policy encoder may express the access rights to process data as an extension to an existing access control language, XACML, recognized as a worldwide standard. Preferably the policy encoder an extension to XACML that encodes access control rights as machine-readable obligations to be met at run time, i.e. while reading the incoming process event flow.

The systems of the present aspects preferably provide for logical log de-multiplexing, enabling each user to query, inspect and monitor a separate event flow which is adapted depending on their access rights.

By using the systems of the above aspects, log integrity constraints may be enforced on all de-multiplexed flows resulting from them.

The above aspects can also allow for dynamic and real time (or substantially real time) changes to policies and revocation of rights for a user.

The filter updater of the above aspects preferably provides a filter update process which automatically computes dynamic views on the basis of (i) the obligations and (ii) the event flow generated by process execution whilst maintaining log integrity constraints. Specifically, if evaluating the policy for a given user generates an obligation to hide an activity, the methods can add the filter to hide the activity only if (and when) the activity to be hidden actually shows up in the data stream or process log.

The filter updater of these aspects can accordingly build up the filters at run time, depending on the triples dynamically added to the process flow.

As the systems are able to apply restrictions directly on the data stream or process flow, the event flow can be continuously analysed when updating the filters and verifying permissions on the data. The data that the user is allowed to access can then be materialized into a single user-dedicated RDF repository that the user can query using SPARQL. This can ensure that queries performed by the users are executed on a "sanitised" set of data or flow of events. This makes these systems suitable for deployment in a real time environment where processes are continuously monitored and users can register continuous queries in order to be notified by new events matching their query.

The systems of the present aspects are inherently flexible, in contrast to prior art approaches based on static views which use the entire access control policy to build the views associated to a user, adding from the beginning all constraints, including those that may never be evaluated. The creation and maintenance of such static views can be extremely inefficient. In the present methods a filter update may only be carried out after having checked that the data to filter is effectively present in the flow. Preferably the filter is evaluated incrementally, depending on the set of obligations enforced by the access control policy for an incoming event in the flow.

The systems of these aspects preferably also serve to preserve semantic integrity. Unlike the prior art (for example [17]), the present systems can support maintaining the semantic integrity of the query result. This may be achieved by the policy enforcement component generating "constructive" obligations, i.e. obligations to repair the event flow (e.g., eliminating time gaps) after an activity or an attribute has been hidden.

The systems may further provide for using obligations to compute a semantically sound sanitized flow preserving the correctness of metrics computed on the flow, like total elapsed time.

The systems of the present aspects may generate "sanitized" event flows that the user is able to access and query. The semantic integrity of the sanitized flow (e.g., w.r.t. timing) can then be preserved. In some preferred embodiments, an independent policy creator can redact policies to create policies in the standard XACML format (preferably using an extension defined for this purpose). Such policies can be evaluated to provide information on how to filter the flow of triples.

The policy documents created can be forwarded to an independent evaluator to verify that is compliant with auditing rules and other regulations. An important application environment for this aspect is the case of telecom companies that are regulated by external bodies such as AGCOM. Our invention will allow AGCOM to continuously verify the policies that are used to generate the running filters (without, of course, seeing the data) making sure that companies that open their processes to competitors do not disclose information that can be used for unfair competition gain.

The systems of the above aspects can be deployed together with a SPARQL query engine to support transparent querying of process logs whose entries are written in the standard RDF format.

In certain embodiments, the filter updater can add or remove one or more selectors from the filter, said selectors eliminating data to which access is not permitted by the associated policy from the output of the filter. In this way each filter can act as a "mask" on the data and be used either to produce a sanitised data stream for access by the user, or be convolved with a user's query to produce a sanitised response to the query.

Such selectors/filters can be generally permissive, such that the step of updating the filter includes adding one or more selectors to the filter if the new data element is disallowed by the associated policy, and leaving the filter unchanged if the new data element is allowed by the associated policy.

Alternatively such selectors/filters can be generally restrictive, such that the step of updating the filter includes removing one or more selectors from the filter if the new data element is allowed by the associated policy, and leaving the filter unchanged if the new data element is disallowed by the associated policy.

The term "user" includes human users, but also software entities (programs), for example those which run continuous monitoring or continuous querying on a data stream or process flow.

In certain embodiments, the updated filters may be in the form of a SPARQL CONSTRUCT query.

The outputs generated when the data process is de-multiplexed (the data against which the user queries are run) are preferably in the form of RDF repositories.

The systems of the above third and fourth aspects preferably operate by carrying out a method according to the above described first or second aspect respectively.

The systems of the above aspects may include any combination of some, all or none of the above described preferred and optional features.

Brief Description of the Drawings

Embodiments of the invention will now be described by way of example with reference to the accompanying drawings in which:

Figure 1 shows an abstract process schema extended by some concrete activities and has already been described;

Figure 2 shows, in schematic form, embodiments of the present invention implemented in a business process environment;

Figure 3 is a flowchart of a method of an embodiment of the present invention;

Figure 4 shows the data flow between various embodiments of the present invention in a business process environment;

Figure 5 shows a simple serial process;

Figure 6 shows a GUI for authoring of policies as provided in an embodiment of the present invention;

Figure 7 shows the steps of usage of a Policy Administration Point according to an embodiment of the present invention;

Figure 8 shows the interface of a Policy Administration Point according to an embodiment of the present invention;

Figure 9 shows an obligation format as used by a Policy Enforcement Point according to an embodiment of the present invention;

Figure 10 shows an example of authorizations on the sample process of Figure 5;

Figure 11 shows the steps of usage of a Policy Enforcement Point according to an embodiment of the present invention;

Figure 12 is a flowchart showing the operation of a Filter Updater according to an embodiment of the present invention;

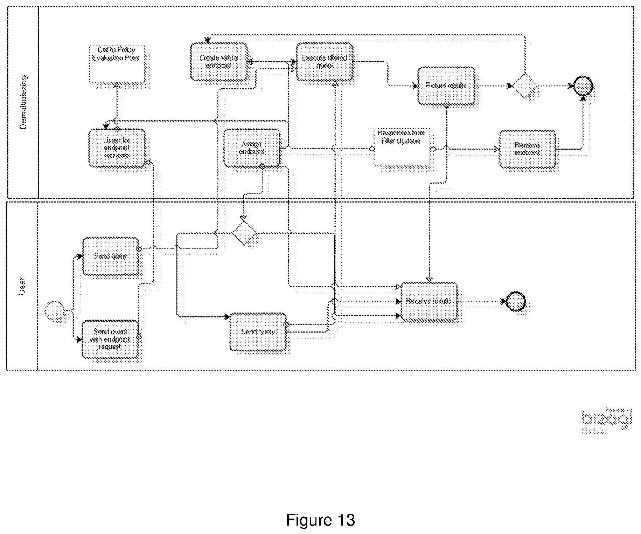

Figure 13 shows the steps in the usage of a Demultiplexer according to an embodiment of the present invention;

Figure 14 shows, in schematic form, the architecture used in a filtering approach according to an embodiment of the present invention;

Figure 15 shows, in schematic form, the architecture used in a rewriting approach according to an embodiment of the present invention;

Figure 16 shows, in schematic form, the architecture and information flows in a business process environment including embodiments of the present invention;

Figure 17 shows, in schematic form, how embodiments of the present invention could be deployed in a business;

Figure 18 illustrates the creation of policies for two different processes; and

Figure 19 shows an example of a simple policy.

Detailed Description

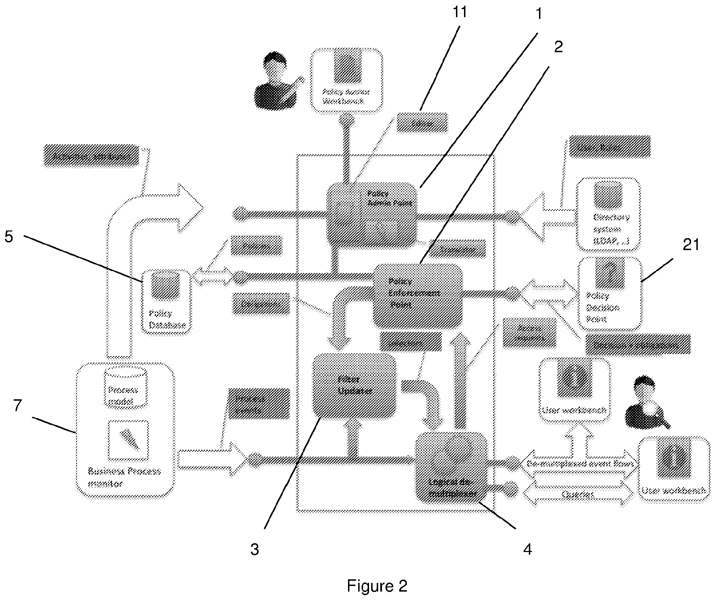

Embodiments of the present invention provide a method and a set of components (references 1-4 in Figure 2) for fast online filtering of process logs. The object of these embodiments is to generate a logical process log for each user/process analyser, showing only the information the user is entitled to see according to the user's access rights and preserving the log temporal integrity.
The method of this embodiment involves the components described below and two actors, the user (i.e., the analyst/auditor monitoring the process) and the administrator (the process owner or a delegate). The method comprises a series of macro-activities:

i. Assign to users access rights to the process log (administrator). Encode each user's access rights in a policy, written in a machine readable format (components)

ii. Use such encoding together with incoming process events to incrementally compute a filter to be applied to the process log as it is being recorded (components).

iii. Execute logical de-multiplexing of the process log (by applying the filter previously computed), providing users with virtual endpoints of separate event flows (components).

iv. Submit a query and obtain a virtual endpoint to a de-multiplexed flows for further querying (user)

v. Add/modify policies (policy administrator)

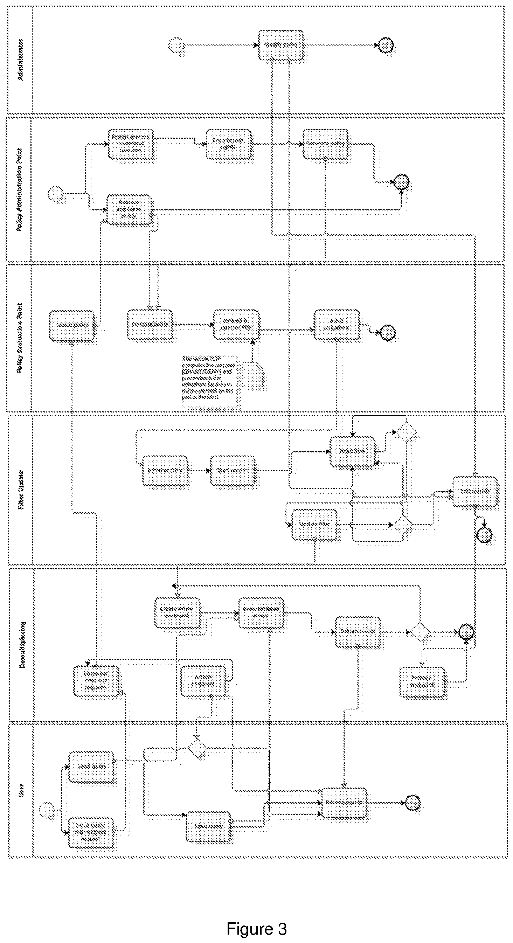

Each macro-activity consists of a sequence of steps. The overall flowchart of the method of this embodiment is depicted in Figure 3.
The four components which each constitute further embodiments of the invention (shown shaded in Figure 2; references 1-4) are virtual devices, whose functional areas are listed below with reference to the components shown in Figure 2 and the relevant portion of the flowchart shown in Figure 3.

• Policy Encoding (Policy Administration Point - Translator; Policy Administration Point flowchart) and policy revocation (Revocation flowchart)

- Policy Enforcement (Policy Enforcement Point; Policy Enforcement flowchart)

- Online filter computation with enforcement of log integrity constraints (Fig. 2: Filter Updater; Figure 2: Filter Updating Flowchart),

- Generation of virtual event flows (and support for queries on them) (Fig. 2: Log DeMultiplexer; Figure 2: De-multiplexing flowchart)

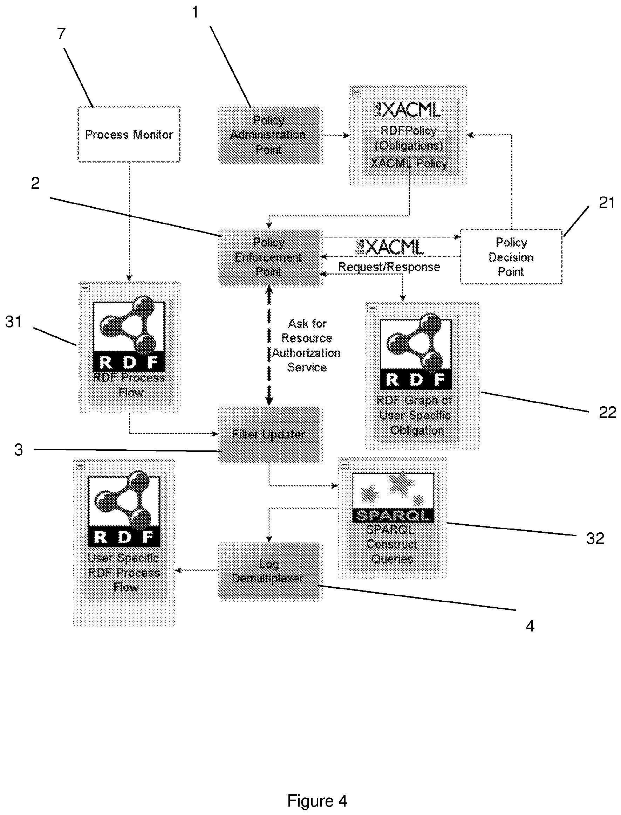

The diagram in Figure 4 shows the data flow between the various areas and components.

The Policy Administration Point 1 defines the policy by embedding into a policy compliant with the XACML standard some obligations defined using the RDFPolicy schema extension element described below. This way of extending the language is, in turn, compliant with the XACML extensibility profile (http://www.oasis-open.org/XACML).

The policies defined this way are stored into a policy database 5 (shown in Figure 2).

The Policy Enforcement Point 2 takes as an input the RDFPolicy elements that apply to the user that makes the request. In case the user is not authenticated or the session has expired, a standard Policy Decision Point 21 is involved in the process, in order to retrieve the policy.

The Policy Enforcement Point 2 creates and maintains a RDF graph 22 that represents the obligations related to that specific user; the RDF graph is built from the RDFPolicy elements.

The Filter Updater 3 takes as an input the RDF process flow 31, representing process execution information, which is generated by the Process Monitor 7.

The event flow in input triggers requests to the Policy Enforcement Point service 2, in order to check authorizations and alternative representations of elements in the process monitor flow.

The Filter Updater 3 generates a set of SPARQL CONSTRUCT queries 32 that are continuously processed by the Log Demultiplexer 4. The demultiplexer 4 generates as an output a policy-compliant RDF log to which the user will be able to submit queries.

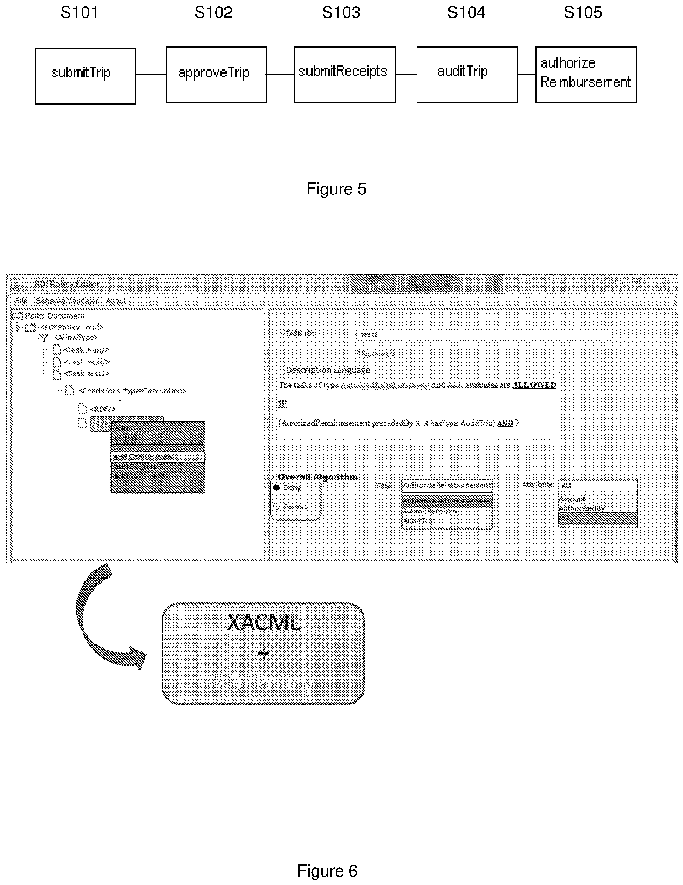

In order to illustrate the embodiments of the invention operation in detail, a simple serial process such as that shown in Figure 5 will be considered as a running example. This relates to the authorization of expenses in relation to a trip. The five stages in the process are the submitting of trip details (S101), the approval of the trip by a manager (S102), the submitting of receipts for expenses incurred on the trip (S103), the auditing of the trip by a manager or accounts department (S104) and the authorization of a reimbursement of expenses (S105).

Figure 1 shows the RDFS graph associated to this process. The activity classes ("Submit Trip"; "Approve Trip"; "Submit Receipts"; "Audit Trip" and "Authorize Reimbursement") are specializations of a generic "Task" class, whilst the overall trip process is a specialization of a generic "Process" class.

*Policy Administration Point*

The Policy Administration Point (PAP) 1 is the component in charge of the editing and administration of access policies. A visual policy editor 11 is provided which provides a user-friendly interface for the authoring of policies. This component 11 also allows editing of existing policies. It provides a translation capability that maps (i) a visual representation of the types of activities in the process model and (ii) a visual representation of user/roles to filtering actions (e.g., display/delete/obfuscate) on the process' event flow.

A sub-component of the PAP 1 deals with the automatic translation from visual representation in the editor 11 into the specific policy language used, which is an extension of the standard policy language XACML. The policies are stored into a local repository (the policy database 5) and they are made available anytime for re-editing. In the basic use case, the author asks to edit a policy document. If the document has already been edited it is available in the PAP store and can be retrieved (process route PA1); otherwise the PAP 1 calls its visual policy editor 11 to create a new one (process route PA2). Once the document is available, the administrator can choose whether to display it in the visual editor or transfer it to a textual editor that displays an editable representation of the document. The user is allowed to edit the document and to save it. When the editing work is completed the document is stored. Figure 6 shows an example of a graphical user interface (GUI) for the authoring.

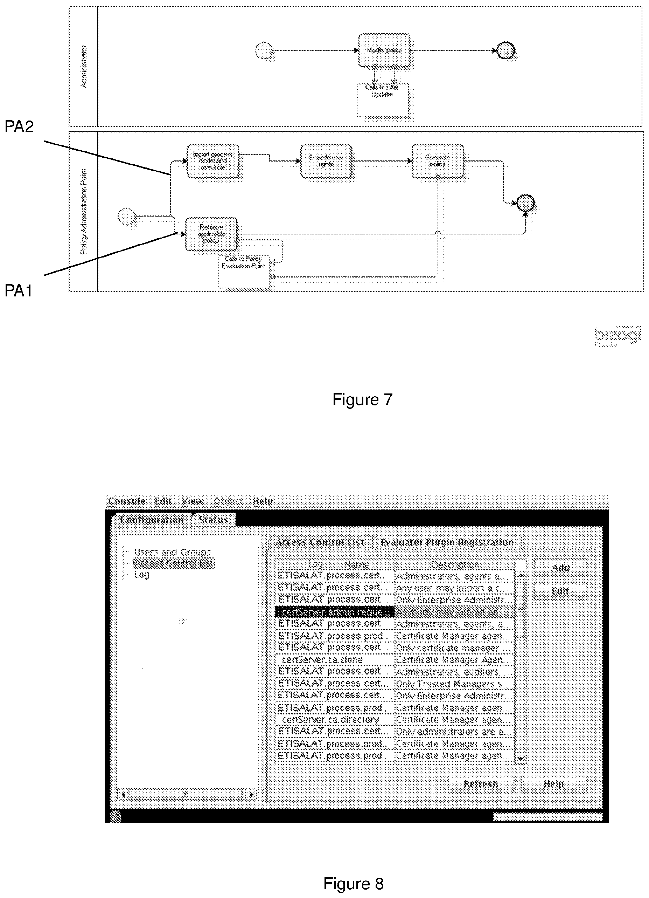

PAP usage is represented in Figure 7 while a mock-up GUI of the policy editor is shown in Figure 8. The Policy Graphical User Interface (GUI) in Figure 7 is a software development tool that simplifies the creation of policies according with the policy language specified in the grammar. The Mock-up GUI gives a view of all the available policies in the system for the editing together with their description.

*Policy Enforcement Point*

The Policy Enforcement Point (PEP) 2 receives the request of the user after her identity has been verified by a suitable authentication mechanism. The PEP 2 retrieves environmental and user information such as paired roles in order to prepare a request for an external Policy Decision Point (PDP) 21. This is accomplished by standard PEP components compliant to the XACML standard. According to the XACML architecture the attribute values (i.e. resource, subject, environment) are obtained from the user's request combined with external attribute sources. The PDP 21 will not be described in detail here as this embodiment of the invention can be integrated with a generic XACML PDP (as shown in the overall architecture in Figure 2). Policy enforcement relies on the Obligations that remain to be filled as a result of the policy evaluation by the PDP 21. If the user is authorized to access the resource, i.e. the process event flow, the PEP 2 will receive from the PDP 21 a set of obligations containing transformations that have to be computed on the flow before it can be disclosed to the user.

The PEP 2 is deployed as a stateful service which keeps trace of the RDF statements representing the policy for the user. The Filter Updater 3 can ask, for each incoming event in the flow, what are the operations allowed on it. This mechanism requires setting up a session for the user and the creation of a Session-Token. The token within the session is paired with all following requests to authenticate the user. The expiration of the token can be due to a timeout, or forced by a policy change. It causes the re-evaluation of the policy and the creation of a new session.

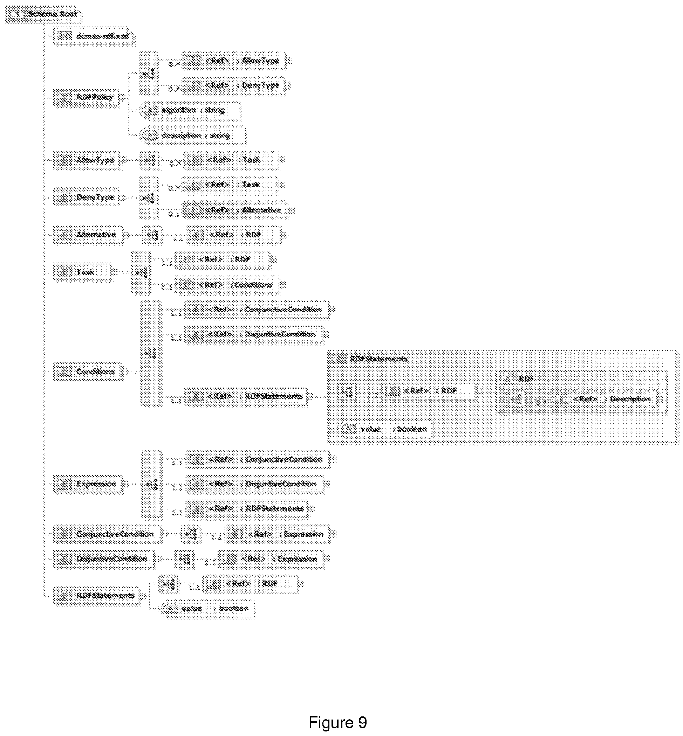

Figure 9 shows an obligation format as used in this embodiment of the present invention, which provides flexibility for the policy definition.

The set of obligations is mapped into a data structure called <RDFPolicy> instantiated by the PEP 2. This module behaves as a 'user profile'.

The <RDFPolicy> element is enforced by the PEP 2 after the user has been authenticated and authorized to access the service. This element can be configured to apply two high level algorithms for the policy:

- Permit-override: by default the authorized user can access any kind of information within the triple stream, except whatever is explicitly denied.

- Deny-override: by default the authorized user cannot access any information except what is explicitly allowed.

The <AllowType> must be paired with the "Deny-override" algorithm and defines the list of activities in the set of displayable information for the input of the rewriting algorithm. On the other hand the <DenyType> is paired with the "Allow-override" and represents the set of not accessible information. A combination of these two types is not possible because the <RDFPolicy> only allows a choice between them while the association of the type with the correct algorithm (<AllowType> elements with deny-override and <DenyType> with Allow-override) is responsibility of the policy writer.

The activities are expressed within the <Task> element which contains a list of RDF statements 'http://www.w3.org/1999/02/22-rdf-syntax-ns#'; the technique of reification is adopted in order to make statements about statements.

The <Conditions> element provides the conditions on the schema under which the statements specified are allowed or denied, it consists of a list of RDF statements or a combination of them in conjunctive and disjunctive mode that are evaluated to determine whether or not the task is applied.

The element <RDFStatements> contains the list of statement according with the schema 'http://www.w3.org/1999/02/22-rdf-syntax-ns#' and a boolean value indicating if the statements in the condition should match or not with the triples stored in order to satisfy the expression in the condition. The combination of the Boolean value with conjunctive and disjunctive elements provides logic expressiveness to the policy language.

The Filter's dynamic view construction algorithm calls the PEP API every time a new event arrives in order to trigger <RDFPolicy> evaluation for that event.

The following is the formal Grammar associated to the RDFPolicy language:

*Exp ::= LPath(Statements) | !LPath(Statements) | AND(Exp, Exp) | OR(Exp, Exp) | true | false*

*Statements ::= List_of_(Statement)*

*Statement ::= <s,p,o>*

In the grammar, LPath() is a Boolean function which takes a set of RDF statements in input and verifies if a path exists in the graph for those statements (the symbols (!, AND, OR) represent the well-known logic operators). If the expression is verified within the graph, the rule of the Task associated with it will be applied, according to the algorithm specified in the RDFPolicy.

The <RDFPolicy> language provides a good level of expressive power for access control on RDF statements. Also, it has been designed to support the continuous process monitoring scenario mentioned in the previous sections.

In terms of the running example the policy that the user is only authorized to see the tasks of type 'AuthorizeReimbursement' can be expressed (of course, this policy is only applicable to processes containing such task).

The PEP will evaluate the following statements:

Subject: -7d037ca7:133f47d79a0:-7fff

Predicate: http://org.ebtic.bpm.zeus/processOntology#hasTask

Resource: -7d037ca7:133f47d79a0:-7ffe.

Subject: -7d037ca7:133f47d79a0:-7ffe

Predicate: http://www.w3.org/1999/02/22-rdf-syntax-ns#type

Literal: http://org.ebtic.bpm.zeus.demo#AuthorizeReimbursement".

And in case the RDF schema contains paths to the statements, the PEP 2 will notify the Updater 3 that the corresponding entity (the Authorize Reimbursement task) can be included in the output flow.

Note that in the previous example we considered a policy that forbids what is not explicitly allowed. All attributes that the user is allowed to see must be explicitly allowed in the policy.

On the other hand, if we consider a policy which allows everything that is not explicitly forbidden, a 'deny' action on specific targets should be added. For example, in order to satisfy the policy the user is not authorized to see the tasks of type'AuditTrip' the following paths must be present in the graph:

Subject: -7d037ca7:133f47d79a0:-7fff

Predicate: http://org.ebtic.bpm.zeus/processOntology#hasTask

Resource: -7d037ca7:133f47d79a0:-7ffe.

Subject: -7d037ca7:133f47d79a0:-7ffe

Predicate: http://www.w3.org/1999/02/22-rdf-syntax-ns#type

Literal: http://org.ebtic.bpm.zeus.demo#SubmitTrip".

Subject: -7d037ca7:133f47d79a0:-7fff

Predicate: http://org.ebtic.bpm.zeus/processOntology#hasTask

Resource: -7d037ca7:133f47d79a0:-7ffe.

Subject: -7d037ca7:133f47d79a0:-7ffe

Predicate: http://www.w3.org/1999/02/22-rdf-syntax-ns#type

Literal: http://org.ebtic.bpm.zeus.demo#SubmitReceipts"

Subject: -7d037ca7:133f47d79a0:-7fff

Predicate: http://org.ebtic.bpm.zeus/processOntology#hasTask

Resource: -7d037ca7:133f47d79a0:-7ffe .

Subject: -7d037ca7:133f47d79a0:-7ffe

Predicate: http://www.w3.org/1999/02/22-rdf-syntax-ns#type

Literal: http://org.ebtic.bpm.zeus.demo#AuthorizeReimbursement".

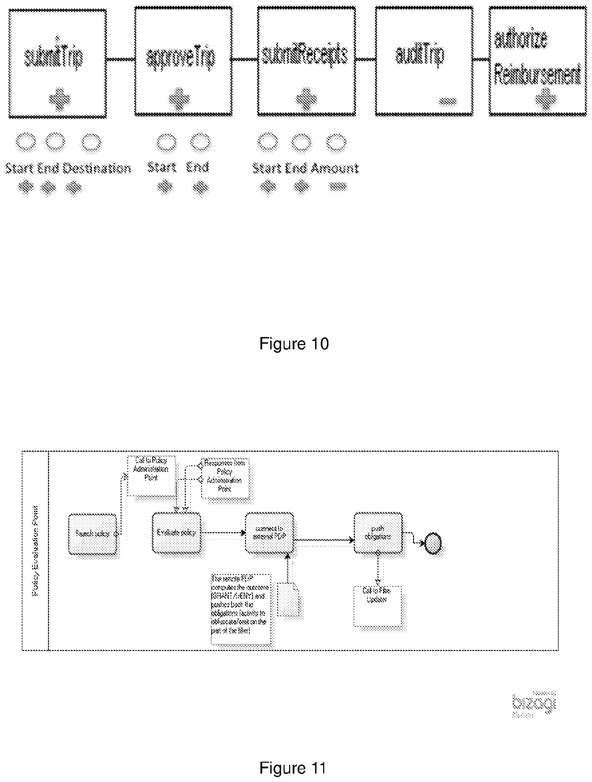

This way the task id matching the above paths will be authorized while all the others (i.e., AuditTrip) will be removed (as shown in Figure 10).

The above example corresponds to a path of length one; more complex policies will correspond to longer paths. For example, in order to satisfy the policy the user is not authorized to see the tasks of type'AuthorizeReimbursement' if NOT preceded by a task of type AuditTrip, the following path must be present in the graph:

Subject: -7d037ca7:133f47d79a0:-7fff

Predicate: http://org.ebtic.bpm.zeus/processOntology#hasTask

Resource: -7d037ca7:133f47d79a0:-7ffe .

Subject: -7d037ca7:133f47d79a0:-7ffe

Predicate: http://www.w3.org/1999/02/22-rdf-syntax-ns#type

Literal: http://org.ebtic.bpm.zeus.demo#AuthorizeReimbursement".

Subject: -7d037ca7:133f47d79a0:-7ffe

Predicate: http://org.ebtic.bpm.zeus/processOntology#precededBy

Resource: -7d037ca7:133f47d79a0:-7ff0.

Subject: -7d037ca7:133f47d79a0:-7ff0

Predicate: http://www.w3.org/1999/02/22-rdf-syntax-ns#type

Literal: http://org.ebtic.bpm.zeus.demo#AuditTrip".

If such a path exists, the task id matching such path will be authorized while all the others will be removed.

*Filter Updater*

The Filter Updater 3 computes the user filter incrementally. Filters are computed on demand depending on (i) the set of obligations (ii) the incoming event. Let us assume that all users subscribe to the log at the same time t=0. At t=0, all access policies get simultaneously enforced and all filters are empty. Each time a new process event is generated and logged, the Updater 3 checks, for each active policy, if the incoming event is an instance of an entity that is allowed by the policy. When this is the case, the filter associated to the policy is not changed. If this is not the case, the Updater 3 adds a selector to the filter. The selector eliminates the entity from the output flow associated to the policy. Also, it modifies other entities to preserve log integrity. This procedure guarantees that each filter is incrementally composed of the minimal conjunction of selectors enforcing the corresponding policy on the current log.

If a user subscribes to the log at a later time t=T, the log will contain a number of events. Such events can be simply replayed if the log is small. Otherwise, a static filter (a simple query) will be computed over the process log, returning the corresponding prefix of the de-multiplexed log corresponding to the policy.

The Updater 3 uses SPARQL CONSTRUCT queries as selectors over the RDF process log.

At each moment, a user u will correspond to the filter Vu= {Q1 , Q2, ... ,Qk} where {Qk}is its current set of selectors.

The RDF triples shown below are instances of these activities, already generated by the process monitor when the user subscribes to the log, using the following prefixes substitution in order to facilitate the reader:

PREFIX rdf: <http://www.w3.org/1999/02/22-rdf-syntax-ns#>

PREFIX ebtic: <http://org.ebtic.bpm.zeus/processOntology#>

PREFIX etisalat: <http://org.ebtic.bpm.zeus.producer.experiment#>

<etisalat:PROCESS1><ebtic:hasTask><etisalat:TASK0>.

<etisalat:PROCESS1><ebtic:hasTask><etisalat:TASK1>.

<etisalat:PROCESS1><ebtic:hasTask><etisalat:TASK2>.

<etisalat:PROCESS1><ebtic:hasTask><etisalat:TASK3>.

<etisalat:PROCESS1><ebtic:hasTask><etisalat:TASK4>.

<etisalat:PROCESS1><ebtic:vname> "TripManager".

<etisalat:TASK0><rdf:type><etisalat:SubmitTrip>.

<etisalat:TASK0><ebtic:followedBy><etisalat:TASK1>.

<etisalat:TASK1><rdf:type><etisalat:ApproveTrip>.

<etisalat:TASK1><ebtic:followedBy><etisalat:TASK2>.

<etisalat:TASK2><rdf:type><etisalat:SubmitReceipts>.

<etisalat:TASK2><ebtic:followedBy><etisalat:TASK3>.

<etisalat:TASK3><rdf:type><etisalat:AuditTrip>.

<etisalat:TASK3><ebtic:followedBy><etisalat:TASK4>.

<etisalat:TASK4><rdf:type><etisalat:AuthorizeReimbursement>.

At each new event, the Updater 3 calls the API of the PEP 2. This interface is is modelled as a service that offers to the Updater 3 the operations shown in Table 1 below:

Table 1

| PEP Operation | Sample Input parameter | Output | Description |
|---|---|---|---|
| check () | TaskType | Displayablehidden | *check() returns a Boolean value Displayable if the input parameter combined with the obligations corresponds to a path in the RDFS graph held by the PEP* |
| nextDUMMY () | TaskType | dummyType | *nextDUMMY() retrieves the next dummy TaskType name to be used as a substitute for an hidden entity (if any)* |

The Process Monitor 7 is modelled as a service whose interface offers to the Updater 3 the operations shown in Table 2 below:

Table 2

| PM Operation | Input parameter | Output | Description |
|---|---|---|---|
| nextactivity() | None | Next Task | *nextactivity() gets an entire Task event, with all attributes and connections.* |

The algorithm the Updater 3 uses to incrementally compute the filter associated to a policy is set out below as pseudocode. It uses a local stack.

DECLARATION SECTION

```
OUTPUT: filter V (initially empty)

VAR stack, TaskID, oldTaskID, predecessorID: initially empty

DO WHILE NOT EOF

        oldTaskID = TaskID

        CurrentTask = PROCESS.nextactivity()

        SWITCH C = PEP.check(CurrentTask.Type)

        C == displayable:

            IFempty(stack) THEN

                    add to V: (i)selector Q1copying Task (ii) selector
                    Q2copying Task attributes

            ELSE

                    predecessorID = pop()

                    add to V (i)selector Q1copying Task (ii) selector
                    Q2copying followedBy of predecessor

                    /* we copy the task then we build a seamless
                    followedBybetween the latest displayable activity and the
                    current one. Here we also select and copy attributes */

            ENDIF
```

```
C == obfuscated

DUMMY=PEP.nextDUMMY(TaskID.Type)

/* nextDUMMY() provides the dummy name associated to TaskID according
to the obligations */

IFempty(stack) THEN

        add to V (i) a selector Q1 inserting the dummy (ii) a selector
        Q2 copying into the dummy the attributes of abstract class
        Task(iii) a selector Q3 preserving the followedBy

ELSEpredecessorID = pop()

        add to V (i) a selector Q1 inserting the dummy

            (ii) a selector Q2 copying into the dummy the attributes
            of   abstract   class   Task(iii)   aselector   Q3copying
            followedBy of predecessor

    ENDIF

C == hidden

IFempty(stack)THEN push($oldTaskID)

        /* if stack is empty we push the previous activity, as it was
        surely displayable; otherwise just skip it */

    ENDIF

END SWITCH

ENDDO
```

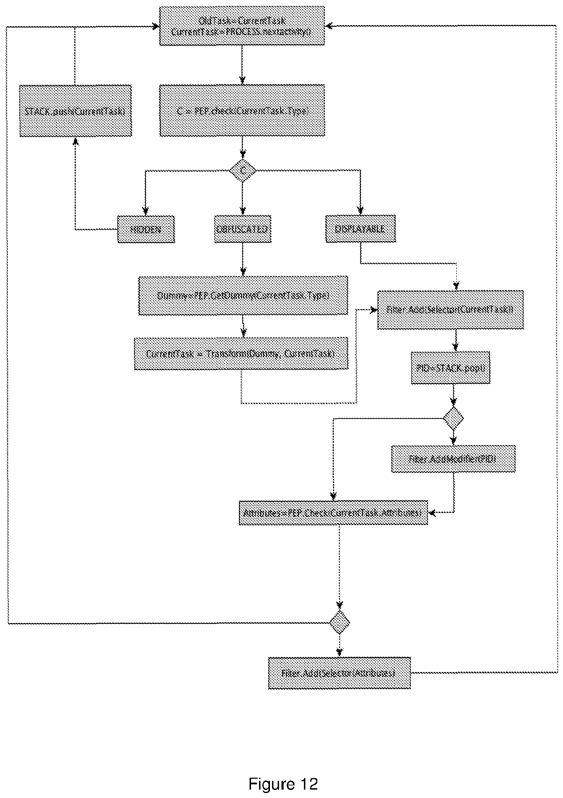

The algorithm flowchart is shown in Figure 12.

*Sample run of the Updater*

In terms of our running example, we assume that the policy for a given user forbids the user to see AuditTrip, leaving all other process activities (i.e. SubmitTrip, ApproveTrip, SubmitReceipts and AuthorizeReimbursement) displayable. When the Updater starts, it reads from the process flow the first activity, whose ID is TASK0. The stack is empty so filter V includes $Q_1$

CONSTRUCT    {?OldTaskIDebtic:followedByetisalat:TASK0}    WHERE    {?OldTaskIDebtic:followedByetisalat:TASK0.}

The query answer is empty, as it should be, since the first task has no predecessor. OldTaskID will now containTASK0.

Then, the Updater 3 reads TASK1. V becomes ($Q_1 Q_2$)

CONSTRUCT    {?OldTaskIDebtic:followedByetisalat:TASK0}    WHERE    {?OldTaskIDebtic:followedByetisalat:TASK0.}

CONSTRUCT    {?OldTaskIDebtic:followedByetisalat:TASK1}    WHERE    {?OldTaskIDebtic:followedByetisalat:TASK1.}

The query answer is <etisalat:TASK0><ebtic:followedBy><etisalat:TASK1>

OldTaskID will now contain TASK1.

Then, the Updater 3 reads TASK2. V becomes $(Q_1Q_2Q_3)$

| CONSTRUCT | {?OldTaskIDebtic:followedByetisalat:TASK0} | WHERE | {?OldTaskIDebtic:followedByetisalat:TASK0.} |
|---|---|---|---|
| CONSTRUCT | {?OldTaskIDebtic:followedByetisalat:TASK1} | WHERE | {?OldTaskIDebtic:followedByetisalat:TASK1.} |
| CONSTRUCT | {?OldTaskIDebtic:followedByetisalat:TASK2} | WHERE | {?OldTaskIDebtic:followedByetisalat:TASK2.} |

The query answer is<etisalat:TASK0><ebtic:followedBy><etisalat:TASK1>. <etisalat:TASK1><ebtic:followed-By><etisalat:TASK2>.

OldTaskID will now contain TASK2.

Then, the Updater 3 reads TASK3. This is NOT a displayable activity (it belongs to the AuditTrip type) and the stack is empty, so TASK2 (OldTaskID) is just pushed onto the stack. V stays $(Q_1Q_2Q_3)$.

Then, the Updater 3 reads TASK4. This is indeed a displayable activity but the stack is not empty, so we pop the stack. V becomes $(Q_1Q_2Q_3Q_4)$:

| CONSTRUCT | {?OldTaskIDebtic:followedByetisalat:TASK0} | WHERE | {?OldTaskIDebtic:followedByetisalat:TASK0.} |
|---|---|---|---|
| CONSTRUCT | {?OldTaskIDebtic:followedByetisalat:TASK1} | WHERE | {?OldTaskIDebtic:followedByetisalat:TASK1.} |
| CONSTRUCT | {?OldTaskIDebtic:followedByetisalat:TASK2} | WHERE | {?OldTaskIDebtic:followedByetisalat:TASK2.} |

CONSTRUCT {etisalat:TASK2ebtic:followedByetisalat:TASK4} WHERE{}

The query answer is:

<etisalat:TASK0><ebtic:followedBy><etisalat:TASK1>.

<etisalat:TASK1><ebtic:followedBy><etisalat:TASK2>.

<etisalat:TASK2><ebtic:followedBy><etisalat:TASK4>.

**Efficiency**

The Updater 3 includes heuristics for improving the multiplexing efficiency. Such provisions depend on the configuration of the Demultiplexer component 4 (discussed below). If the de-multiplexed flows are materialized, the Updater 3 will be imposing constraints over (1) the number of selectors of the filter V per access role and (2) the number of selectors that roles have in common.

When the re-writing configuration is decided the Updater 3 checks the selector output cardinality (as opposed to materializing them) using ASK queries as selectors.

This way, the filter will be actually computed only when user submits a query Q of her own. Result will be computed as follows:

$$Q_u= Q(V_u) =Q(Q_1 Q_1 \ldots Q_k) = Q(Q_1)Q(Q_1)\ldots Q(Q_k)$$

For each query Q, the cardinality of $Q(Q_k)$ can be checked before adding it to the materialized $V_u$.

Besides eliminating empty queries, the Updater uses thresholds to provide fast query rewriting at an acceptable loss of information (lossy rewriting).

*Alternative authorizations*

The Updater 3 supports alternatives for triple patterns that are not accessible from a specific user. By means of alternatives, an answer to the query is returned in any case.

Consider the query Q:

SELECT ?processID ?taskID ?taskType ?followingTaskID WHERE { ?processIDebtic:hasTask ?taskID.

?taskIDrdf:type ?taskType.

?taskIDebtic:followedBy ?followingTaskID.

?taskIDetisalat:ExecutedBy

"Carlo Rossi"^^<http://www.w3.org/2001/XMLSchema#string>.}

whose answer for a fully authorized user would be

etisalat:PROCESS1etisalat:TASK0 etisalat:SubmitTripetisalat:TASK1

If it is assumed that the user running the query has no permission to see the etisalat:ExecutedBy attribute. In this case, the query answer set would be empty. In order to prevent this "stonewalling", the policy can designate attributes alternative to a forbidden one.

Obligations can specify that a forbidden attribute can be substituted by its alternative version, in such a way that values of the alternative attributes are substituted to the ones of the forbidden attribute as follows:

CONSTRUCT {?taskIDetisalat:ExecutedBy ?Obfuscator } WHERE { ?processIDebtic:hasTask ?taskID.

?taskIDetisalat:MonitoredBy ?Obfuscator . }

This will return anyway a result to the query, without disclosing the protected information. In the case of the above query, the policy can establish that instead of providing the "etisalat:ExecutedBy" value can include the "etisalat:MonitoredBy" that executed the task. The obligation pushed to the filter will cause the view V of to contain the above query.

*Log Demultiplexer*

The Demultiplexer 4 provides the users with the abstraction of separate logical event flows. This abstraction can be supported in two ways selected according to a configuration option: by materializing the flows or by query rewriting. In the former case the Demultiplexer 4 applies the selectors computed by the Updater 3 to the process log as a dynamic continuous query, generating multiple "logical" logs. In the latter case, the Demultiplexer 4 waits for a user query. When the query arrives, it composes it with the current set of selector for that user. To ensure consistency, the composed query is executed on a log snapshot at query time.

From the time the user is authenticated, the filter is generated and the correspondent flow is available. Once the user requests an endpoint to the system, the filter is dynamically created according to the data processed and the sanitized flow is made available to the user through the web service from the moment the system receive the request. So the endpoint will contain the sanitized data from the moment the request is received. Once the user submits a continuous query, the query is registered in the system and remains listening to the sanitized flow for new data satisfying the query. The results generated this way are returned to the user following a push approach. If the same user registers a new continuous query, the query remains in the system and returns the results from the moment the query is registered. It is worth a mention that **the same** query A submitted at two different times $t_1$ and $t_2$ returns after a time $t_x$ a set of results $RAt_{1x}$ and $RAt_{2x}$ so that: $RAt_{1x} \subseteq RAt_{2x}$ ($RAt_{1x} \subset RAt_{2x}$, or $RAt_{1x} = RAt_{2x}$ in the case where $RAt_{1x}$ was empty after $t_2$).

This component takes care of applying the views maintained by the Filter Updater component 3 and to create and maintain for the duration of the session a SPARQL endpoint for the user to execute the queries on the sanitized flow.

In one embodiment of the present invention, a user request a SPARQL endpoint address or submits a SPARQL query though a Web Service interface, asking for the user's credentials. The service will take care of passing the credentials to the other components where policies are extracted and applied.

From the time the user is authenticated, the filter is generated and the correspondent flow is available. Once the user requests an endpoint to the system the filter is dynamically created according to the data processed and the sanitized flow is made available to the user through the web service from the moment the system receive the request. So the endpoint will contain the sanitized data from the moment the request is received. This is an important consideration, because once the user submits a continuous query, the query is registered in the system and remains listening to the sanitized flow for new data satisfying the query. The results generated this way are returned to the user following a push approach. If the same user registers a new continuous query, the query remains in the system and returns the results from the moment the query is registered. It is worth a mention that **the same** query A submitted in two different times $t_1$ and $t_2$ again returns after a time $t_x$ a set of results $RAt_{1x}$ and $RAt_{2x}$ so that: $RAt_{1x \subseteq} RAt_{2x}$ ($RAt_{1x \subset} RAt_{2x}$ or $RAt_{1x} = RAt_{2x}$ in the case where $RAt_{1x}$ was empty after $t_2$).

Two implementation techniques for this method are set out below: filtering and rewriting.

Filtering Approach

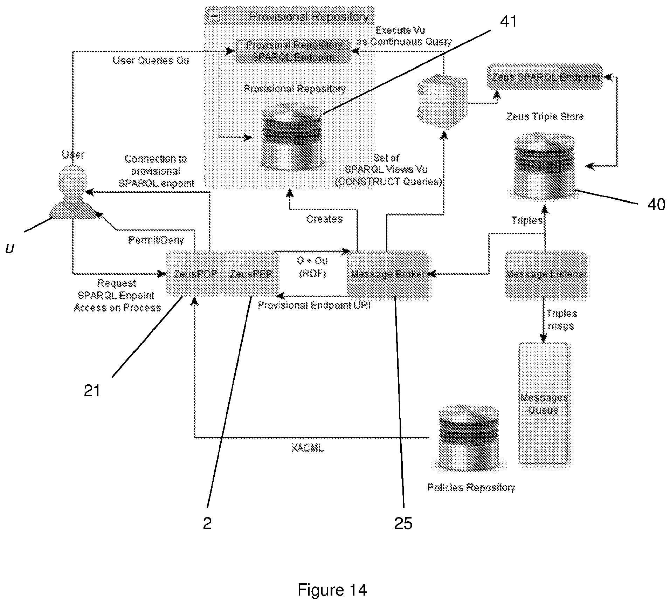

In the filtering approach, the repository used by a request and the main repository of triples generated by process monitoring are physically decoupled. The architectural layout of this approach is shown in Figure 14. A sample execution is as follows:

1. A user *u* submits her credentials and a process schema URI to the PDP 21 and then to the PEP 2 (both trusted).

2. Based on policy, credentials and object, the PEP 2 computes an outcome O (PERMIT/DENY) for the requestor and pushes a (signed) set of obligations $O_u$ to the trusted Message Broker 25

3. Based on O, the Message Broker 25 starts a connection with the remote monitor (the Filter Updater 3). Based on $O_u$, the Message Broker initializes a request view $V_u$

4. The Log De Multiplexer 4 executes $V_u$ on the process triple flow as a continuous modifiable query, and keeps updating $V_u$ according to the triples that arrive.

5. Results of $V_u$ are sent to a provisional repository 41 (called for instance REQUEST_101E4367) created on the triple store 40. The endpoint is sent to the user.

The user *u* can now use the SERVICE primitive to submit query Q to the provisional endpoint, obtaining $Q(V_u)$, as follows

SELECT ?a WHERE {SERVICE <http://10.10.103.203:8080/openrdf-sesame/repositories/REQUEST_101E4367>{?a ebtic:followedBy ?b .}}

This way, the user sees a user-specific temporary SPARQL service she can query. The original endpoint should not be accessible to querying, but only used for the computation of views.

Note that simple operational security measures (e.g., firewall perimeter checks) can ensure that each user can only access a single endpoint. This improves the overall security of the system.

Re-Writing Approach

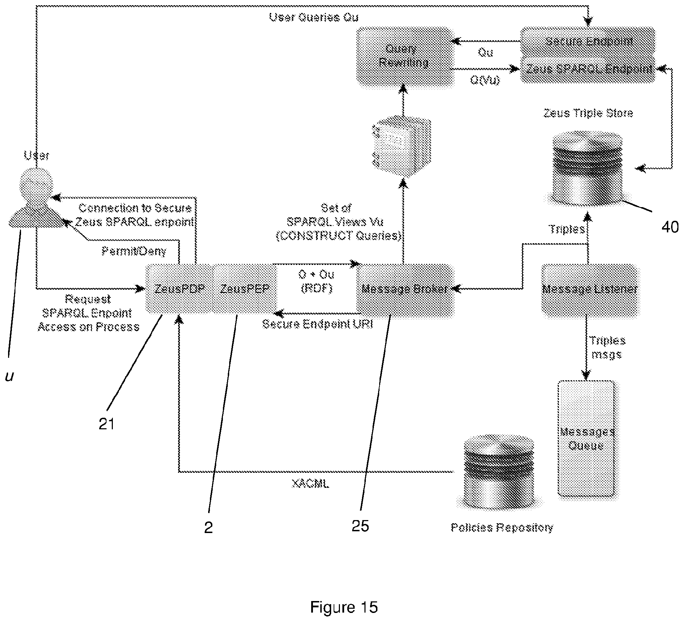

In the rewriting approach, there is a single endpoint. Every time the user wants to pose a query Q, the composition $Q(V_u)$ is computed instead. The architectural layout of this is shown in Figure 15. A sample execution is as follows:

1. A user *u* submits her credentials and a process schema URI to the PDP 21 and then to the PEP 2 (both trusted).

2. Based on policy, credentials and object, the PEP 2 computes an outcome O (PERMIT/DENY) for the requestor and returns it to the PDP 21.

3. The PDP 21 communicates the decision to the user *u.*

4. The PEP 2 pushes a (signed) set of obligations $O_u$ to the trusted message broker 25.

5. Based on O, the Message Broker 25 starts a connection with the remote monitor (The Filter Updater 3). Based on $O_u$, the Message Broker 25 initializes a request view $V_u$ and keeps updating $V_u$ according to the triples that arrive.

$V_u$ is not executed.

6. When the user sends a query Q to the Log De Multiplexer 4, Q gets rewritten, i.e. $V_u$ and Q are composed, obtaining $Q(V_u)$

7. $Q(V_u)$ is submitted to the process SPARQL endpoint.

8. Results are transferred back to the user.

Embodiments of the invention use XACML obligations to drive the deferred computation of the view V defining the RDF data that will be accessible to a request (i.e., that the requestor will be able to query). This way (i.e., by mandating obligations) our policy will limit on the visibility of activities and their attributes during process analysis.

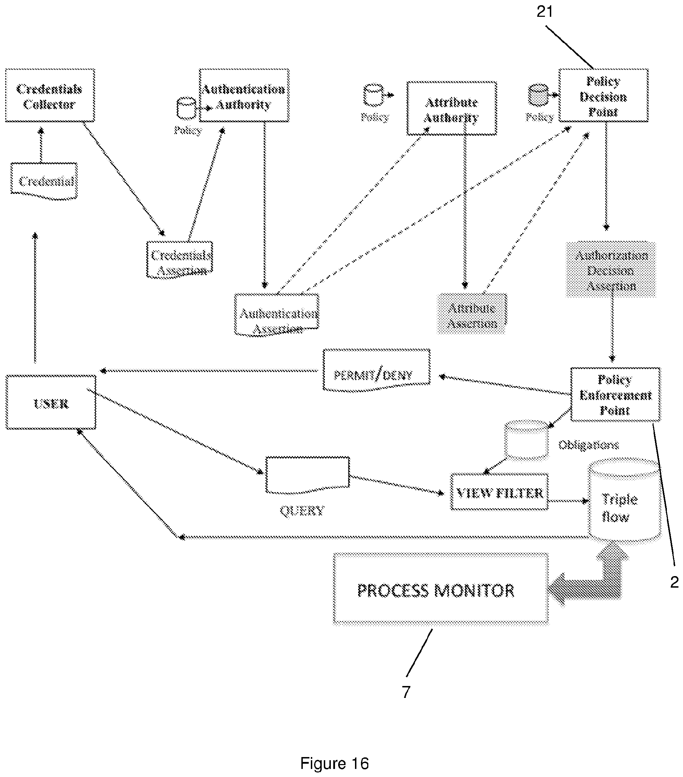

Figure 16 summarizes the information flows among the components of the implementation set out in the embodiments above. The follow points are notable about the architecture:

•   Policies are written and stored via a suitable Policy Administration Point (PAP) 1

•   The Policy Enforcement Point (PEP) 2, upon request of a Policy Decision Point (PDP) 21, will evaluate the policy with respect to an access request. Requests carry:

    ◦ subject credentials

    ◦ action (display, monitor, etc.) and

    ◦ URIs of the process schemata the subject wants to act upon.

•   The PEP 2 after the PDP 21 has granted a PERMIT on a process generates Obligations (deferred actions) that enforce mandatory use of filter views to access the process data. This way (i.e., by mandating obligations) a policy can limit on the visibility of activities and their attributes during process analysis.

•   The PEP 2 will push such obligations to the Access Control (AC) engine as RDF triples expressing authorizations on activities. The AC engine will identify forbidden parts of the process (Activities/attributes tagged "+" are visible to the requestor - shown schematically in respect of our example process in Figure 10) and execute the view generator.

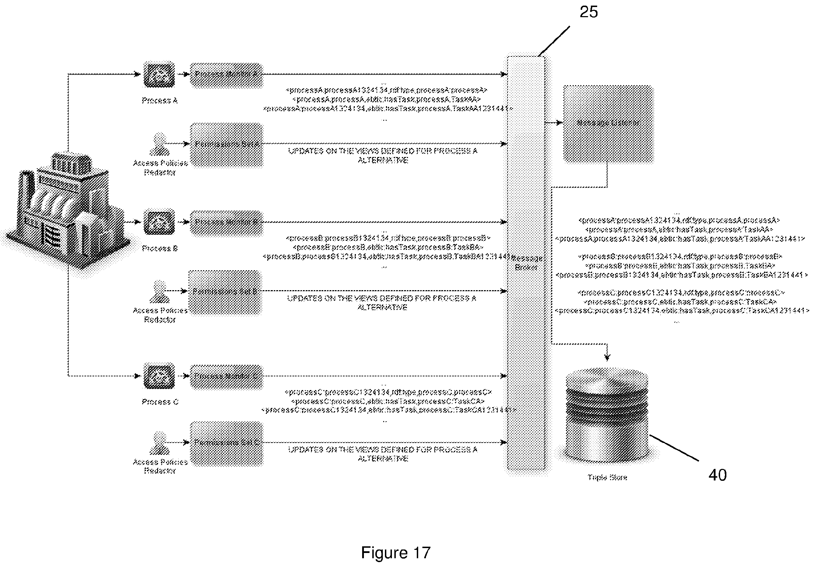

Embodiments of this invention can be deployed by connecting them to an Enterprise Service Bus in order to monitor more than one process simultaneously. An example deployment diagram of the embodiments of the invention is shown in Figure 17.

**XACML Extension**

In this Section, we define a complete Access Control (AC) model and language for our process-monitoring engine. In an effort to be standard-compliant, this AC model is an instantiation of the standard role-based AC model, where the objects to be protected are the monitored process structures, identified via their schemata. This AC model associates roles to process definitions (the process RDFS schema). Each role can act (actions being display, monitor, etc.) on one or more processes. The AC language is defined as a XACML profile, defined via the mechanism of XACML extension.

XACML is a widely used policy language to write and manage authorization policies. Arbitrary attributes can be expressed and that makes the language application independent and extensible to accommodate the specific requirements of a specific application and domain. The extensibility points already built in the XACML for expressing authorizations in term of metadata can therefore be exploited.

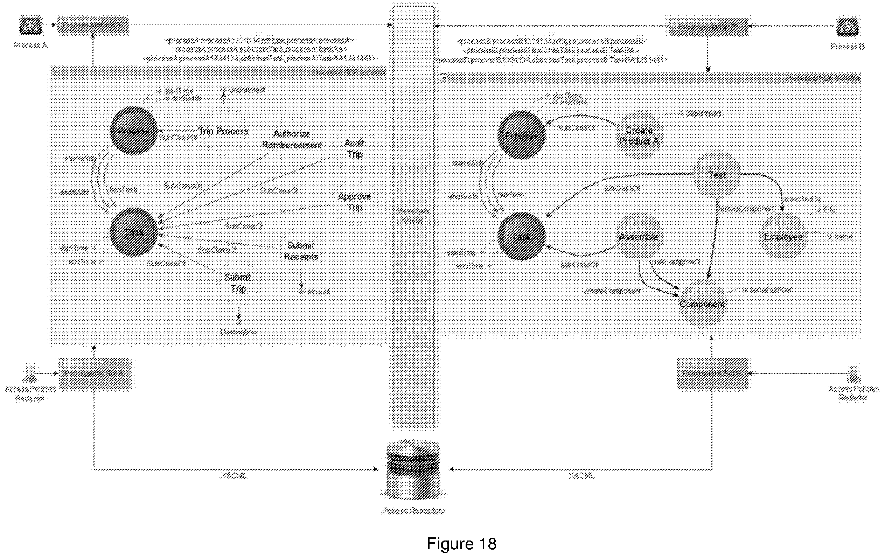

The embodiments of the invention use the reification in order to express RDF Statements. The authoring tool in the PAP has access to a limited part of the vocabulary and, indeed, part of the vocabulary itself is created at runtime by the running application. The policy language allows the writer to explicitly define the limitation of the user on tasks and attributes (in general on a part of the ontology). Figure 18 shows the creation of policies for two different processes.

In the above embodiments, access control does not focus on granting or denying access to the user to the resource requested but it behaves as a 'filter' on the data stored in the triple store. Once that the user has been identified, a profile representing her roles (or the list of her attributes) is created and all the following SPARQL queries she wants to perform will be readapted accordingly with it. For the above reason the enforcing of the policy should take care of identifying a specific user within a set of roles and specify for each role the restrictions on the data for that role. The profile for an authenticated user is created after a Policy Decision Point (PDP) evaluates the request, the result is a set of instructions for the Policy Enforcement Point (PEP) on how to secure a specific interaction of the user (SPARQL query submission) with the repository. In general the mechanism of XACML Obligation may be used to instruct the PEP for enforcing constraints for future requests made by the user. Currently, the absence of enforcement mechanisms for obligation-based policies imposes the implementation of ad-hoc functional constraints on the PEP. We assume a stateless PDP as XACML policies are stateless as well and a stateless PEP for Policy Enforcement. The invention proposes a stateful Access Control (AC) engine for enabling the same profile for authorizing and filtering several requests (SPARQL queries) from the same user within the same session defined at authentication level; furthermore continuity monitor requires stateful mechanisms. We use XACML obligations to drive the deferred computation of the user view V. Obligations define the RDF data that will be not accessible by a user through his roles (or attributes). An obligation is itself a set of RDF triples in the form <Subject, Predicate, Object>. In particular the Obligation element <AttributeAssignment> may contain an instance of a structured XML data-type expressing the formalisms that will be used by the PEP in order to enforce the constraints. The xml code contains groups of RDF statements and the logic on how to combine them to create the profile for the specific user. In [3] three vocabularies have been used in order to express RDF statements: the RDFs base namespace which defines standard RDF names, the Resource domain ontology that contains domain-specific terms used to describe the resource content and the Subject domain ontology which contains terms used to make assertions on subjects. Our policy language refers to them.

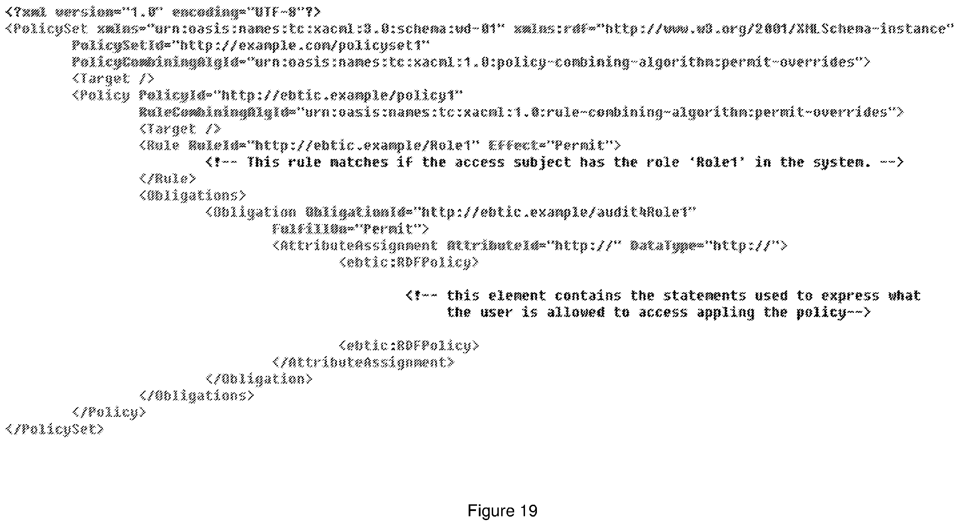

Figure 19 shows an example of how a simple Policy could look like. The Target of the policy has been left empty and it will be used to identify the user and the action he wants to perform, in general the access would be granted for performing a query on the local store.

The policy says that if a user identified within 'Role1' (the Target should match) will submit the request then the PDP will grant access to the user request and the obligations will be passed for the enforcement. The PEP has to take into account such obligations to inform the module creating the set of views for that user. As an example the view may filter all the information related to any task of type SubmitTrip.

The Obligation tag fulfilled with a correct combination of reification statements can provide enough expressiveness to enforce more complex policies. The specifications of the Obligation are discussed in more detail in the section above relating to the Policy Administration Point 1.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display (for example in the design of the business process). The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

In particular, although the methods of the above embodiments have been described as being implemented on the systems of the embodiments described, the methods and systems of the present invention need not be implemented in conjunction with each other, but can be implemented on alternative systems or using alternative methods respectively.

*References*

[1]. Resource Description Framework (RDF) - W3C Standard Definition http://www.w3.org/RDF/

[2]. SPARQL - W3C Standard Definition http://www.w3.org/TR/rdf-sparql-query/

[3]. E. Damiani, S. De Capitani di Vimercati , C. Fugazza , P. Samarati, "Extending Policy Languages to the semantic Web ".

[4]. Wangchao Le, S. Duan, A. Kementsietsidis F. Li Min Wang, "Rewriting Queries on SPARQL Views".

[5]. S. Javanmardi, M. Amini, R. Jalili" An Access Control Model for Protecting Semantic Web Resources"

[6]. T. Finin, A. Joshi, L. Kagal, J. NiuR. SandhuW. WinsboroughB. Thuraisingham "ROWLBAC - Representing RoleBased Access Control in OWL"

[7]. W. Chen, H. Stuckenschmidt "A Model-Driven approach to enable Access Control for Ontologies"

[8]. W.v.d.Aalst et al. "Business Process Management Workshops 2011", Lecture Notes in Business Information Processing, Vol. 99,Springer-Verlag, 2011

[9]. Sandhu R, Thomas R (1997) Task-based authorization controls (TBAC): A family of models for active and enterprise-oriented authorization management. In: Proc. IFIP'97, pp 166-181

[10]. Polyvyanyy A, Smirnov S, Weske M (2009).The triconnected abstraction of process models. In: Proc. BPM'09, pp 229-244, 2009

[11]. Greco G, Guzzo A, Pontieri L (2005) Mining hierarchies of models: From abstract views to concrete specifications. In: Proc. 3rd Int'I Conf. BusinessProcess Management (BPM'05), pp 32-47

[12]. Russell N, van der Aalst W, Hofstede A, Edmond D (2005) Workflow resource patterns: Identification, representation and tool support. In:CAiSE'05, pp 216-232

[13]. Wainer J, Kumar A, Barthelmess P (2007) DW-RBAC: A formal security model of delegation and revocation in workflow systems. InformationSystems 32(3):365-384

[14]. Weber B, Reichert M, Wild W, Rinderle S (2005) Balancing flexibility and security in adaptive process management systems. In: CoopIS'05, LNCS3760, pp 59-76

[15]. Rinderle-Ma S, Reichert M (2008), Managing the life cycle of access rules in CEOSIS. In: Proc. EDOC'08, pp 257-266

[16]. Bassil S, Reichert M, Bobrik R, Bauer T (2009) Access control for monitoring system-spanning business processes in Proviado. In: Proc. EMISA'09, pp125-139

[17]. Patent Number US20100268722A1 Access control for graph data Aravind Yalamanchi et al

## Claims

1. A method of controlling access to a stream of data, the stream of data comprising plural new data elements, the method including the steps of:

   storing a plurality of policies each defining access rights related to a user and having a filter associated with it;
   continuously, for each new data element of the plural new data elements:

      checking whether said data element can be accessed under each of said policies;
      updating the filter associated with each policy to either permit or prevent access to said data element in accordance with said policy; and
      applying the updated filters to the incoming stream of data to generate a plurality of data stores, each based on one of said policies,

receiving a query from a user relating to the data and returning the results of said query to the user based only on data in the respective data store such that the user is only able to access data permitted by the policy associated with the user.

2. A method of controlling access to data, the data comprising plural new data elements, the method including the steps of:

storing a plurality of policies each defining access rights related to a user and having a filter associated with it; continuously, for each new data element of the plural new data elements:

checking whether said data element can be accessed under each of said policies; and updating the filter associated with each policy to either permit or prevent access to said data element in accordance with said policy;

receiving a query from a user relating to the data; revising said query by incorporating the updated filter for said user; and returning the results of said revised query to the user such that the user is only able to access data permitted by the policy associated with the user.

3. A method according to claim 1 or claim 2 wherein the step of updating the filter includes adding or removing one or more selectors from the filter, said selectors eliminating data to which access is not permitted by the associated policy from the output of the filter.

4. A method according to claim 3 wherein the step of updating the filter includes adding one or more selectors to the filter if the new data element is disallowed by the associated policy, and leaving the filter unchanged if the new data element is allowed by the associated policy.

5. A method according to claim 3 wherein the step of updating the filter includes removing one or more selectors from the filter if the new data element is allowed by the associated policy, and leaving the filter unchanged if the new data element is disallowed by the associated policy.

6. A method according to any one of the preceding claims, wherein the user is a software entity.

7. A method according to any one of the preceding claims, wherein the access rights are expressed as an extension to the XACML language.

8. An access control system controlling access to a stream of data, the stream of data comprising plural new data elements, the system including:

a database (5) storing a plurality of policies each defining access rights related to a user and having a filter associated with it; and a processor, wherein the processor is arranged to run the following components:

a filter updater (3) which, continuously for each new data element of the new plural data elements:

checks whether said data element can be accessed under each of said policies; and updates the filter associated with each policy to either permit or prevent access to said data element in accordance with said policy;

a log demultiplexer (4) which applies the updated filters to the incoming stream of data to generate a plurality of data stores, each based on one of said policies,

and wherein the processor is further arranged to receive a query from a user relating to the data and to return the results of said query to the user based only on data in the respective data store such that the user is only able to access data permitted by the policy associated with the user.

9. An access control system controlling access to data, said data comprising plural new data elements, the system including:

a database (5) storing a plurality of policies each defining access rights related to a user and having a filter associated with it;

a processor, wherein the processor is arranged to run a filter updater (3) which, continuously for each new data element of the plural new data elements:

checks whether said data element can be accessed under each of said policies; and
updates the filter associated with each policy to either permit or prevent access to said data element in accordance with said policy;

wherein the processor is further arranged to:

receive a query from a user relating to the data;
run a log demultiplexer (4) which revises said query by incorporating the updated filter for said user; and
return the results of said revised query to the user such that the user is only able to access data permitted by the policy associated with the user.

10. An access control system according to claim 8 or claim 9 wherein the filter updater adds or removes one or more selectors from the filter, said selectors eliminating data to which access is not permitted by the associated policy from the output of the filter.

11. An access control system according to claim 10 wherein the filter updater adds one or more selectors to the filter if the new data element is disallowed by the associated policy, and leaves the filter unchanged if the new data element is allowed by the associated policy.

12. An access control system according to claim 10 wherein the filter updater removes one or more selectors from the filter if the new data element is allowed by the associated policy, and leaving the filter unchanged if the new data element is disallowed by the associated policy.

13. An access control system according to any one of claims 8 to 12, further including the user which is a software entity.

14. An access control system according to any one of claims 8 to 13, wherein the access rights are expressed as an extension to the XACML language.

**Patentansprüche**

1. Verfahren zum Steuern des Zugriffs auf einen Datenstrom, wobei der Datenstrom mehrere neue Datenelemente umfasst, und das Verfahren die folgenden Schritte umfasst:

Speichern einer Vielzahl von Regeln, die jeweils benutzerbezogene Zugriffsrechte definieren und einen diesen zugeordneten Filter aufweisen;
für jedes neue Datenelement der mehreren neuen Datenelemente: Kontinuierliches
Überprüfen, ob auf das Datenelement unter jeder der Regeln zugegriffen werden kann;
Aktualisieren des jeder Regel zugeordneten Filters, um Zugriff auf das Datenelement gemäß der Regel entweder zu ermöglichen oder zu verhindern; und
Anwenden der aktualisierten Filter auf den Eingangsdatenstrom, um eine Vielzahl von Datenspeichrungen zu erzeugen, die jeweils auf einer der Regeln basieren,
Empfangen einer sich auf die Daten beziehenden Abfrage von einem Benutzer, und Rückgabe der Ergebnisse der Abfrage an den Benutzer lediglich auf Basis von Daten in der jeweiligen Datenspeicherung derart, dass der Benutzer lediglich auf diejenigen Daten zugreifen kann, die von der dem Benutzer zugeordneten Regel zugelassen werden.

2. Verfahren zum Steuern des Zugriffs auf Daten, wobei die Daten mehrere neue Datenelemente umfassen, und das Verfahren die folgenden Schritte umfasst:

Speichern einer Vielzahl von Regeln, die jeweils benutzerbezogene Zugriffsrechte definieren und einen diesen zugeordneten Filter aufweisen; für jedes neue Datenelement der mehreren neuen Datenelemente:

Kontinuierliches
Überprüfen, ob auf das Datenelement unter jeder der Regeln zugegriffen werden kann; und
Aktualisieren des jeder Regel zugeordneten Filters, um Zugriff auf das Datenelement gemäß der Regel
entweder zu ermöglichen oder zu verhindern;
Empfangen einer sich auf die Daten beziehende Abfrage von einem Benutzer;
Überarbeiten der Abfrage durch Miteinbeziehen des aktualisierten Filters für den Benutzer; und
Rückgabe der Ergebnisse der überarbeiteten Abfrage an den Benutzer derart, dass der Benutzer lediglich
auf diejenigen Daten zugreifen kann, die von der dem Benutzer zugeordneten Regel zugelassen werden.

3. Verfahren gemäß Anspruch 1 oder Anspruch 2, worin der Schritt des Aktualisierens des Filters das Hinzufügen
oder das Entfernen von einem oder mehreren Selektoren aus dem Filter umfasst, wobei die Selektoren Daten, auf
die ein Zugreifen von der zugeordneten Regel nicht zugelassen wird, aus der Ausgabe des Filters eliminieren.

4. Verfahren gemäß Anspruch 3, worin der Schritt des Aktualisierens des Filters das Hinzufügen eines oder mehrerer
Selektoren zum Filter, wenn das neue Datenelement von der zugeordneten Regel nicht zugelassen wird, und das
Unverändert-Belassen des Filters, wenn das neue Datenelement von der zugeordneten Regel zugelassen wird,
umfasst.

5. Verfahren gemäß Anspruch 3, worin der Schritt des Aktualisierens des Filters das Entfernen eines oder mehrerer
Selektoren aus dem Filter umfasst, wenn das neue Datenelement von der zugeordneten Regel zugelassen wird,
und das Unverändert-Belassen des Filters, wenn das neue Datenelement von der zugeordneten Regel nicht zugelassen wird.

6. Verfahren gemäß einem der vorangegangenen Ansprüche, worin der Benutzer eine Software-Entität ist.

7. Verfahren gemäß einem der vorangegangenen Ansprüche, worin die Zugriffsrechte als eine Erweiterung der
XACML-Sprache ausgedrückt werden.

8. Zugriffssteuerungssystem, das den Zugriff auf einen Datenstrom steuert, wobei der Datenstrom mehrere neue
Datenelemente umfasst, und das System Folgendes umfasst:

eine Datenbank (5), die eine Vielzahl von Regeln, die jeweils benutzerbezogene Zugriffsrechte definieren und
einen diesen zugeordneten Filter aufweisen, speichert; und
einen Prozessor, worin der Prozessor angeordnet ist, die folgenden Komponenten laufen zu lassen:

ein Filter-Aktualisierungsprogramm (3) das für jedes neue Datenelement der neuen mehreren Datenelemente kontinuierlich
überprüft, ob auf das Datenelement unter jeder der Regeln zugegriffen werden kann;und
den jeder Regel zugeordneten Filter aktualisiert, um Zugriff auf das Datenelement gemäß der Regel entweder zu ermöglichen oder zu verhindern;
einen Log-Demultiplexer (4), der die aktualisierten Filter auf den Eingangsdatenstrom anwendet, um eine
Vielzahl von Datenspeicherungen zu erzeugen, die jeweils auf einer der Regeln basieren,
und worin der Prozessor ferner angeordnet ist, eine sich auf die Daten beziehende Abfrage von einem
Benutzer zu empfangen und die Ergebnisse der Abfrage an den Benutzer lediglich auf Basis der Daten in
der jeweiligen Datenspeicherung derart zurückzugeben, dass der Benutzer lediglich auf diejenigen Daten
zugreifen kann, die von der dem Benutzer zugeordneten Regel zugelassen werden.

9. Zugriffssteuerungssystem, das den Zugriff auf Daten steuert, wobei die Daten mehrere neue Datenelemente umfassen, und das System Folgendes umfasst:

eine Datenbank (5), die eine Vielzahl von Regeln, die jeweils benutzerbezogene Zugriffsrechte definieren und
einen diesen zugeordneten Filter aufweisen, speichert;
einen Prozessor, worin der Prozessor angeordnet ist, ein Filter-Aktualisierungsprogramm (3) laufen zu lassen,
das für jedes neue Datenelement der mehreren neuen Datenelemente kontinuierlich
überprüft, ob auf das Datenelement unter jeder der Regeln Zugriff genommen werden kann; und
den jeder Regel zugeordneten Filter aktualisiert, um Zugriff auf das Datenelement gemäß der Regel entweder
zu ermöglichen oder zu verhindern;
worin der Prozessor ferner angeordnet ist,

eine sich auf die Daten beziehende Abfrage von einem Benutzer zu empfangen;

einen Log-Demultiplexer (4) laufen zu lassen, der die Abfrage durch Miteinbeziehen des aktualisierten Filters für den Benutzer überarbeitet; und

die Ergebnisse der überarbeiteten Abfrage an den Benutzer derart zurückzugeben, dass der Benutzer lediglich auf diejenigen Daten zugreifen kann, die durch die dem Benutzer zugeordnete Regel zugelassen werden.

10. Zugriffssteuerungssystem gemäß Anspruch 8 oder Anspruch 9, worin das Filter-Aktualisierungsprogramm einen oder mehrere Selektoren aus dem Filter hinzufügt oder entfernt, wobei die Selektoren Daten, auf die ein Zugreifen von der zugeordneten Regel nicht zugelassen wird, aus der Ausgabe des Filters eliminieren.

11. Zugriffssteuerungssystem gemäß Anspruch 10, worin das Filter-Aktualisierungsprogramm einen oder mehrere Selektoren zum Filter hinzufügt, wenn das neue Datenelement von der zugeordneten Regel nicht zugelassen wird, und den Filter unverändert belässt, wenn das neue Datenelement von der zugeordneten Regel zugelassen wird.

12. Zugriffssteuerungssystem gemäß Anspruch 10, worin das Filter-Aktualisierungsprogramm einen oder mehrere Selektoren aus dem Filter entfernt, wenn das neue Datenelement von der zugeordneten Regel zugelassen wird, und den Filter unverändert belässt, wenn das neue Datenelement von der zugeordneten Regel nicht zugelassen wird.

13. Zugriffssteuerungssystem gemäß einem der Ansprüche 8 bis 12, ferner umfassend den Benutzer, der eine Software-Entität ist.

14. Zugriffssteuerungssystem gemäß einem der Ansprüche 8 bis 13, worin die Zugriffsrechte als eine Erweiterung der XACML-Sprache ausgedrückt werden.

**Revendications**

1. Procédé de commande de l'accès à un flux de données, le flux de données comportant de multiples nouveaux éléments de données, le procédé incluant les étapes ci-dessous consistant à :

stocker une pluralité de politiques définissant chacune des droits d'accès connexes à un utilisateur et présentant un filtre qui lui est associé ;
de façon continue, pour chaque nouvel élément de données des multiples nouveaux éléments de données :

vérifier s'il est possible d'accéder audit élément de données en vertu de chacune desdites politiques ;
mettre à jour le filtre associé à chaque politique afin d'autoriser ou d'empêcher l'accès audit élément de données conformément à ladite politique ; et
appliquer les filtres mis à jour au flux de données entrant en vue de générer une pluralité de magasins de données qui sont chacun basés sur l'une desdites politiques ;

recevoir une requête en provenance d'un utilisateur connexe aux données et renvoyer les résultats de ladite requête à l'utilisateur uniquement sur la base de données dans le magasin de données respectif, de sorte que l'utilisateur est uniquement en mesure d'accéder aux données autorisées par la politique associée à l'utilisateur.

2. Procédé de commande de l'accès à des données, les données comportant de multiples nouveaux éléments de données, le procédé incluant les étapes ci-dessous consistant à :

stocker une pluralité de politiques définissant chacune des droits d'accès connexes à un utilisateur et présentant un filtre qui lui est associé ;
de façon continue, pour chaque nouvel élément de données des multiples nouveaux éléments de données :

vérifier s'il est possible d'accéder audit élément de données en vertu de chacune desdites politiques ; et
mettre à jour le filtre associé à chaque politique afin d'autoriser ou d'empêcher l'accès audit élément de données conformément à ladite politique ;

recevoir une requête en provenance d'un utilisateur connexe aux données ;
modifier ladite requête en intégrant le filtre mis à jour pour ledit utilisateur ; et
renvoyer les résultats de ladite requête modifiée à l'utilisateur, de sorte que l'utilisateur est uniquement en mesure d'accéder à des données autorisées par la politique associée à l'utilisateur.

3. Procédé selon la revendication 1 ou 2, dans lequel l'étape de mise à jour du filtre inclut l'étape consistant à ajouter ou à supprimer un ou plusieurs sélecteurs au/du filtre, lesdits sélecteurs éliminant des données auxquelles l'accès n'est pas autorisé par la politique associée de la sortie du filtre.

4. Procédé selon la revendication 3, dans lequel l'étape de mise à jour du filtre inclut l'étape consistant à ajouter un ou plusieurs sélecteurs au filtre, si le nouvel élément de données est interdit par la politique associée, et à laisser le filtre inchangé si le nouvel élément de données est autorisé par la politique associée.

5. Procédé selon la revendication 3, dans lequel l'étape de mise à jour du filtre inclut l'étape consistant à supprimer un ou plusieurs sélecteurs du filtre si le nouvel élément de données est autorisé par la politique associée, et à laisser le filtre inchangé si le nouvel élément de données est interdit par la politique associée.

6. Procédé selon l'une quelconque des revendications précédentes, dans lequel l'utilisateur est une entité logicielle.

7. Procédé selon l'une quelconque des revendications précédentes, dans lequel les droits d'accès sont exprimés sous la forme d'une extension au langage XACML.

8. Système de commande d'accès commandant l'accès à un flux de données, le flux de données comportant de multiples nouveaux éléments de données, le système incluant :

une base de données (5) stockant une pluralité de politiques définissant chacune des droits d'accès connexes à un utilisateur et présentant un filtre qui lui est associé ; et
un processeur, dans lequel le processeur est agencé de manière à exécuter les composants suivants :

un module de mise à jour de filtre (3) qui, de façon continue, pour chaque nouvel élément de données des multiples nouveaux éléments de données :

vérifie s'il est possible d'accéder audit élément de données en vertu de chacune desdites politiques ; et
met à jour le filtre associé à chaque politique afin d'autoriser ou d'empêcher l'accès audit élément de données conformément à ladite politique ;

un démultiplexeur logarithmique (4) qui applique les filtres mis à jour au flux de données entrant en vue de générer une pluralité de magasins de données qui sont chacun basés sur l'une desdites politiques ; et

dans lequel le processeur est en outre agencé de manière à recevoir une requête en provenance d'un utilisateur connexe aux données et à renvoyer les résultats de ladite requête à l'utilisateur uniquement sur la base de données dans le magasin de données respectif, de sorte que l'utilisateur est uniquement en mesure d'accéder aux données autorisées par la politique associée à l'utilisateur.

9. Système de commande d'accès commandant l'accès à des données, lesdites données comportant de multiples nouveaux éléments de données, le système incluant :

une base de données (5) stockant une pluralité de politiques définissant chacune des droits d'accès connexes à un utilisateur et présentant un filtre qui lui est associé ;
un processeur, dans lequel le processeur est agencé de manière à exécuter un module de mise à jour de filtre (3) qui, de façon continue, pour chaque nouvel élément de données des multiples nouveaux éléments de données :

vérifie s'il est possible d'accéder audit élément de données en vertu de chacune desdites politiques ; et
met à jour le filtre associé à chaque politique afin d'autoriser ou d'empêcher l'accès audit élément de données conformément à ladite politique ;

dans lequel le processeur est en outre agencé de manière à :

recevoir une requête en provenance d'un utilisateur connexe aux données ;
exécuter un démultiplexeur logarithmique (4) qui modifie ladite requête en intégrant le filtre mis à jour pour ledit utilisateur ; et

renvoyer les résultats de ladite requête modifiée à l'utilisateur, de sorte que l'utilisateur est uniquement en mesure d'accéder à des données autorisées par la politique associée à l'utilisateur.

10. Système de commande d'accès selon la revendication 8 ou 9, dans lequel le module de mise à jour de filtre ajoute ou supprime un ou plusieurs sélecteurs au/du filtre, lesdits sélecteurs éliminant des données auxquelles l'accès n'est pas autorisé par la politique associée de la sortie du filtre.

11. Système de commande d'accès selon la revendication 10, dans lequel le module de mise à jour de filtre ajoute un ou plusieurs sélecteurs au filtre, si le nouvel élément de données est interdit par la politique associée, et laisse le filtre inchangé si le nouvel élément de données est autorisé par la politique associée.

12. Système de commande d'accès selon la revendication 10, dans lequel le module de mise à jour de filtre supprime un ou plusieurs sélecteurs du filtre si le nouvel élément de données est autorisé par la politique associée, et laisse le filtre inchangé si le nouvel élément de données est interdit par la politique associée.

13. Système de commande d'accès selon l'une quelconque des revendications 8 à 12, incluant en outre l'utilisateur, lequel est une entité logicielle.

14. Système de commande d'accès selon l'une quelconque des revendications 8 à 13, dans lequel les droits d'accès sont exprimés sous la forme d'une extension au langage XACML.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

```xml
<?xml version="1.0" encoding="UTF-8"?>
<PolicySet xmlns="urn:oasis:names:tc:xacml:3.0:schema:wd-01" xmlns:rdf="http://www.w3.org/2001/XMLSchema-instance"
        PolicySetId="http://example.com/policyset1"
        PolicyCombiningAlgId="urn:oasis:names:tc:xacml:1.0:policy-combining-algorithm:permit-overrides">
        <Target />
        <Policy PolicyId="http://ebtic.example/policy1"
                RuleCombiningAlgId="urn:oasis:names:tc:xacml:1.0:rule-combining-algorithm:permit-overrides">
                <Target />
                <Rule RuleId="http://ebtic.example/Role1" Effect="Permit">
                        <!-- This rule matches if the access subject has the role 'Role1' in the system. -->
                </Rule>
                <Obligations>
                        <Obligation ObligationId="http://ebtic.example/audit4Role1"
                                FulfillOn="Permit">
                                <AttributeAssignment AttributeId="http://" DataType="http://">
                                        <ebtic:RDFPolicy>

                                                <!-- this element contains the statements used to express what
                                                        the user is allowed to access appling the policy-->

                                        <ebtic:RDFPolicy>
                                </AttributeAssignment>
                        </Obligation>
                </Obligations>
        </Policy>
</PolicySet>
```

Figure 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100268722 A1

### Non-patent literature cited in the description

- **E. DAMIANI ; S. DE CAPITANI DI VIMERCATI ; C. FUGAZZA ; P. SAMARATI.** *Extending Policy Languages to the semantic Web*
- **WANGCHAO LE ; S. DUAN ; A. KEMENTSIETSIDIS ; F. LI MIN WANG.** *Rewriting Queries on SPARQL Views*
- **S. JAVANMARDI ; M. AMINI ; R. JALILI.** *An Access Control Model for Protecting Semantic Web Resources*
- **T. FININ ; A. JOSHI ; L. KAGAL ; J. NIUR. ; SANDHUW. ; WINSBOROUGHB. THURAISINGHAM.** *ROWLBAC - Representing RoleBased Access Control in OWL*
- Business Process Management Workshops 2011. **W.V.D.AALST et al.** Lecture Notes in Business Information Processing. Springer-Verlag, 2011, vol. 99
- **SANDHU R ; THOMAS R.** Task-based authorization controls (TBAC): A family of models for active and enterprise-oriented authorization management. *Proc. IFIP,* 1997, vol. 97, 166-181
- **POLYVYANYY A ; SMIRNOV S ; WESKE M.** The triconnected abstraction of process models. *Proc. BPM,* 2009, vol. 09, 229-244
- **GRECO G ; GUZZO A ; PONTIERI L.** Mining hierarchies of models: From abstract views to concrete specifications. *Proc. 3rd Int'l Conf. BusinessProcess Management (BPM'05),* 2005, 32-47
- **RUSSELL N ; VAN DER AALST W ; HOFSTEDE A ; EDMOND D.** Workflow resource patterns: Identification, representation and tool support. *CAiSE,* 2005, vol. 05, 216-232
- **WAINER J ; KUMAR A ; BARTHELMESS P.** DW-RBAC: A formal security model of delegation and revocation in workflow systems. *InformationSystems,* 2007, vol. 32 (3), 365-384
- **WEBER B ; REICHERT M ; WILD W ; RINDERLE S.** Balancing flexibility and security in adaptive process management systems. *CoopIS'05, LNCS3760,* 2005, 59-76
- **RINDERLE-MA S ; REICHERT M.** Managing the life cycle of access rules in CEOSIS. *Proc. EDOC,* 2008, vol. 08, 257-266
- **BASSIL S ; REICHERT M ; BOBRIK R ; BAUER T.** Access control for monitoring system-spanning business processes in Proviado. *Proc. EMISA,* 2009, vol. 09, 125-139